# EUROPÄISCHE PATENTSCHRIFT

(11) **EP 3 547 561 B1**
(45) Veröffentlichungstag und Bekanntmachung des Hinweises auf die Patenterteilung: **09.12.2020**
(21) Anmeldenummer: 19165537.2
(22) Anmeldetag: 27.03.2019
(51) Int. Cl.: H04B 7/0408, H04B 7/06, H04B 1/40, H01Q 1/32, H04W 52/42

(54) **ANTENNEN-EINRICHTUNG FÜR DIE BIDIREKTIONALE KOMMUNIKATION AUF FAHRZEUGEN**
ANTENNA DEVICE FOR BIDIRECTIONAL COMMUNICATIONS ON VEHICLES
AGENCEMENT D'ANTENNE POUR LA COMMUNICATION BIDIRECTIONNELLE DE VÉHICULES

(30) Priorität: 31.03.2018 DE 102018002661
(43) Veröffentlichungstag der Anmeldung: 02.10.2019
(73) Patentinhaber: Fuba Automotive Electronics GmbH, 31162 Bad Salzdetfurth (DE)
(72) Erfinder: LINDENMEIER, Stefan, 82131 Gauting-Buchendorf (DE); LINDENMEIER, Heinz, 82152 Planegg (DE)
(74) Vertreter: Manitz Finsterwald Patent- und Rechtsanwaltspartnerschaft mbB

(56) Entgegenhaltungen:
- US-A1- 2006 211 439
- US-A1- 2007 142 074
- US-A1- 2007 160 116

## Beschreibung

Die Erfindung bezieht sich auf eine Antennen-Einrichtung für die bidirektionale Kommunikation auf Fahrzeugen.

Insbesondere bezieht sich die Erfindung auf eine Antennen-Einrichtung auf einem Fahrzeug für die bidirektionale Fahrzeug-zu Fahrzeug-Kommunikation -z.B. bekannt als Car2Car - und für die Fahrzeug-zu Infrastruktur- Kommunikation - z.B. bekannt als Car2X.

Die Verbesserung des mobilen Empfangs in Fahrzeugen ist für fest installierte Rundfunknetze zum Beispiel in der DE10100812 A, der DE102007011636 A, der DE102005043304 und der DE102006057520 A beschrieben. Allen in diesem Stand der Technik beschriebenen Antennensystemen ist gemeinsam, dass sie ausschließlich für Empfangssysteme, also für die Verbesserung des Empfangs, d. h. für den unidirektionalen Funkbetrieb ausgelegt sind.

Moderne Funksysteme für die bidirektionale Kommunikation von Fahrzeugen untereinander, und für die Kommunikation von Fahrzeugen mit der Infrastruktur zum Beispiel als CAR2CAR (car-to-car) oder VTV (Vehicle to Vehicle) bekannt, arbeiten bidirektional in einem Sende- und einem Empfangsmodus. Diese Systeme beruhen auf der automatisch, ad-hoc aufgebauten, schnellen Datenübertragung zwischen Fahrzeugen untereinander und zwischen Fahrzeugen und straßenseitigen Kommunikationseinrichtungen. Hierbei ist die Übertragung von Verkehrsinformationen, Gefahrenwarnungen und von Unterhaltungsinhalten vorgesehen. Im Gegensatz zu den im Zusammenhang mit dem Stand der Technik genannten Systemen mit fest installierten Sendeanlagen, zum Beispiel Rundfunkanlagen mit permanenter Aussendung ist für die Kommunikation von Fahrzeugen untereinander keine vorinstallierte Netzwerkinfrastruktur vorgesehen. Vielmehr basieren diese Systeme auf einer drahtlosen Nahbereichs-LAN- Technik, wobei die Funkverbindungen als ad-hoc gebildete Autokommunikation bei einer Reichweite von wenigen 100m hergestellt sind. Die ad-hoc hergestellte Fahrzeug-zu-Fahrzeug-Kommunikation ermöglicht das Zusammenwirken von Fahrzeugen durch Funkverbindung mehrerer Fahrzeuge untereinander und durch Verteilung von Informationen unter diesen Fahrzeugen, ist es möglich, Komfort und Sicherheit im Straßenverkehr in hohem Maß zu verbessern.

Für das Fahrzeug-zu-Fahrzeug-Kommunikationsnetz ist derzeit ein Frequenzband mit der Frequenzbandbreite von 70 MHz bei 5,9 GHz, unterteilt in 7 Frequenzkanäle von jeweils 10 MHz Frequenzbandbreite im Rahmen des DSCR- Standards vorgesehen. Für die Organisation des Fahrzeug-zu-Fahrzeug-Kommunikationsnetzes ist ein Organisations-Frequenzkanal für bidirektionale digitale Kommunikation der Frequenzbandbreite 10 MHz in der Frequenzmitte des in der Frequenz 70 MHz breiten Frequenzbandes bereitgestellt. Die fahrzeugbezogene Funkanlage besteht aus einer Sende-Empfangsanlage, welche sich im einfachsten Fall aus einer Transceiver-Einrichtung (Sende- Empfänger) und einer Sende-Empfangsantenne zusammensetzt. Der bidirektionale Daten-Funkverkehr kann auf einem der Frequenzkanäle sequenziell in aufeinanderfolgenden Sende-bzw. Empfangs-Zeitschlitzen organisiert sein, oder Senden und Empfangen findet gleichzeitig auf unterschiedlichen Frequenzkanälen statt. Transceiver-Einrichtungen stehen zum Beispiel als Einkanal-Sende-Empfänger für die bidirektionale Kommunikation auf einem bestimmten oder auch auf einem beliebigen Kanal im Frequenzband bzw. als Mehrkanal-Sende-Empfänger für die bidirektionale Kommunikation auf unterschiedlichen Kanälen für Senden und Empfang zur Verfügung. Allen gemeinsam ist ein Hochfrequenzanschluss 3 zum Anschluss einer Antenne auf dem Fahrzeug. Eine solche Antenne nach dem Stand der Technik ist zum Beispiel auf dem Dach, vorzugsweise in dessen Zentrum angebracht. Eine derartige Sende-Empfangssituation ist jedoch den bekannten, auch im Zusammenhang mit dem Stand der Technik beschriebenen Störungen durch Mehrwegeausbreitung ausgesetzt. Für den einfachsten Fall ist eine Monopolantenne auf dem Dach, jedoch in Dachmitte angenommen. Für diese Antenne wird die geforderte Bedingung der Rundcharakteristik der Antennenanordnung in horizontaler Ebene zufriedenstellend erreicht. In aller Regel steht dieser Einbauort für die Antenne aus fahrzeugtechnischen Gründen jedoch nicht zur Verfügung. Aus diesem Grund müssen andere Einbauorte auf dem Fahrzeug gesucht werden, welche jedoch alle durch den Einfluss der Fahrzeugstruktur die Richtwirkung der Antennenanlage wesentlich negativ beeinflussen.

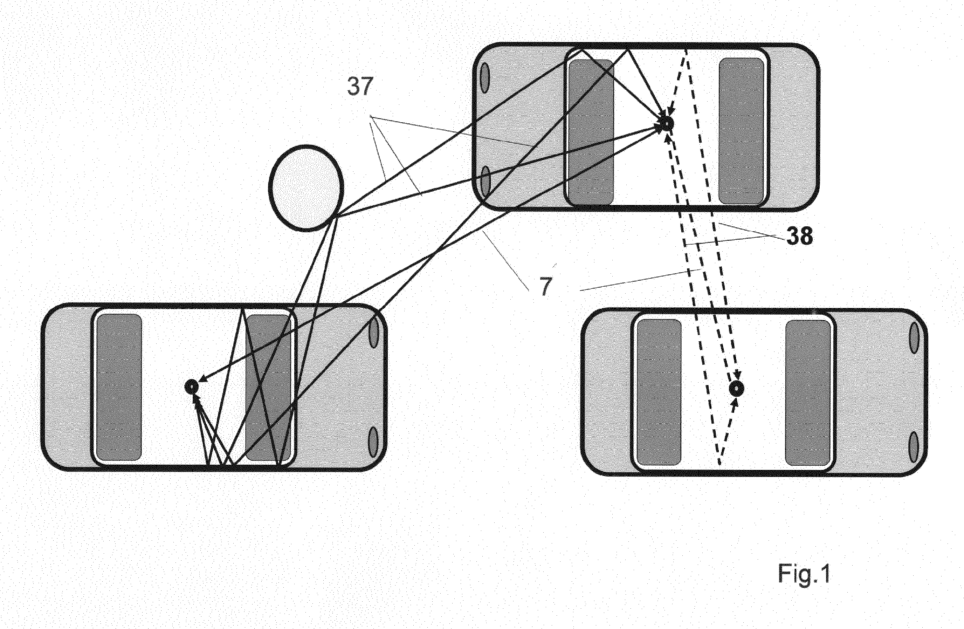

Die Beeinträchtigung der Kommunikation ist besonders schwerwiegend, wenn eine solche Antenne zum Beispiel auf der Dachunterseite, also im Innenraum des Fahrzeugs angebracht ist. Figur 1 zeigt das entsprechende Szenario der Wellenausbreitung in einem zwischen einer Gruppe von Fahrzeugen ad-hoc aufgebauten Kommunikationsnetz für bidirektionale Kommunikation, wenn eine Monopolantenne nicht auf dem Dach sondern zum Beispiel auf der Unterseite des Daches angebracht ist. Neben den direkt gemäß der Sichtverbindung einfallenden elektromagnetischen Wellen 7 trägt eine Vielzahl von über Umwege sich ausbreitenden Wellen 37 zur Funkverbindung zwischen den Fahrzeugen bei. Hierzu gehören insbesondere neben den über Reflexionen im Umfeld der Fahrzeuge beitragenden elektromagnetischen Wellen alle Reflexionen und Beugungen, welche elektromagnetische Wellenbündel 38 an den inhomogenen Strukturen der eigenen Fahrzeuge erfahren. Aufgrund der im Vergleich zu den Fahrzeugabmessungen und zu den Öffnungen in der elektrisch leitenden Karosserie kleinen Freiraumwellenlänge von etwa 5 cm bei einer Frequenz von ca. 6 GHz ist die Karosserie auf statistische Weise für die Wellenausbreitung teilweise reflektierend und teilweise durchlässig. Die statistisch vollständig unkoordinierte Überlagerung sämtlicher Wellenanteile unterschiedlicher Phasen und Größen führen zu temporären Signalauslöschungen insbesondere auch durch temporäre Abschattungen an den Antennen im bewegten Fahrzeug. Dadurch gehen digitale Informationen verloren. Die angestrebte Rundcharakteristik des Strahlungsdiagramms der Fahrzeugantenne ist mit dieser Anordnung nicht zu erreichen. Das Richtdiagramm der Antenne fächert aufgrund des Einflusses der Fahrzeugkarosserie mit tiefen Einzügen vielfach auf. Ein ungestörter Rundumempfang für eine gute Funkverbindung zwischen den Fahrzeugen in einem Szenario des tatsächlichen Fahrzeugumfelds kann mit einer Antenneneinrichtung dieser Art nicht erreicht werden.

Für die Fahrzeug-zu-Fahrzeug-Kommunikation bzw. die Fahrzeug-zu-Infrastruktur-Kommunikation ist die Übertragungssicherheit der Daten im Hinblick auf die Verkehrssicherheit von besonderer Bedeutung und es besteht ein besonderer Bedarf nach einer sicheren Hochfrequenzverbindung zwischen den Fahrzeugen und somit nach einer Antennen-Einrichtung, welche die durch Mehrwegeausbreitung oder Dopplereffekte im bewegten Fahrzeug hervorgerufenen Störungen weitgehend vermeidet.

Aus der US 2007/142074 A1, der US 2007/160116 A1 oder der US 2006/211439 A1 sind jeweils Antennen-Einrichtungen bekannt, bei denen eine Anpassung der Antennenkonfiguration und somit eine Veränderung der Richtcharakteristik basierend auf einer Leistungssteuerung erfolgen kann. Hierzu wird jeweils ein Leistungsindikator von einer Gegenstelle gesendet.

Die Aufgabe der Erfindung besteht darin, eine Antennen-Einrichtung für ein Fahrzeug anzugeben, welche an den Hochfrequenzanschluss einer Transceiver-Einrichtung angeschlossen werden kann und selbsttätig die genannten Störungen sowohl für den Empfang als auch für das Senden bei der bidirektionalen Kommunikation wesentlich verringert.

Diese Aufgabe wird durch eine Antennen-Einrichtung mit den Merkmalen des Anspruchs 1 gelöst.

Offenbart ist eine Antennen-Einrichtung auf einem Fahrzeug für eine Fahrzeug-Transceiver-Einrichtung 2, deren Sendeleistungspegel-Regeleinrichtung in der Weise gestaltet ist, dass während der bidirektionalen Kommunikation der Sendeleistungspegel 5 mit absinkender Qualität der Kommunikationsverbindung größer eingestellt und umgekehrt mit steigender Übertragungsqualität der Kommunikationsverbindung abgesenkt ist, umfassend zumindest einige der folgenden Merkmale:
- die Antennen-Einrichtung ist als Antennen-Diversity-Einrichtung 1 mit mehreren Antennenelementen 34a, 34b,.. in der Weise gestaltet, dass mehrere Diversity-Einstellungen zur Auswahl unterschiedlicher Strahlungs-Richtwirkungen für Senden und für Empfang anwählbar sind
- die Antennen-Diversity-Einrichtung 1 ist mit dem Hochfrequenzanschluss 3 der Fahrzeug-Transceiver-Einrichtung 2 verbindbar
- in der Antennen-Diversity-Einrichtung 1 ist ein Leistungspegel-Detektor 6 vorhanden, mit welchem der Sendeleistungspegel 5 der Fahrzeug-Transceiver-Einrichtung 2 detektiert und laufend registriert ist
- zur Anhebung der Übertragungsqualität der Kommunikationsverbindung ist nach alternierend durchgeführter Wahl einer jeweils anderen Einstellung der Antennen-Diversity-Einrichtung 1 und Detektion des bei dieser Einstellung bestehenden Sendeleistungspegels eine Einstellung der Antennen-Diversity-Einrichtung 1 gewählt, bei der ein kleinerer Sendeleistungspegel erreicht ist.

Vorteilhafte Ausführungsformen der Erfindung sind in der Zeichnung, den Unteransprüchen und der Beschreibung beschrieben.

Während der bidirektionalen Kommunikation in der Antennen-Diversity-Einrichtung 1 kann im Rahmen eines Prüfvorgangs in aufeinanderfolgenden Prüfschritten jeweils in der Weise eine andere Einstellung der Antennen-Diversity-Einrichtung 1 gewählt sein, dass der bei jeder Prüfeinstellung auftretende Sendeleistungspegel 5 als Prüf-Sendeleistungspegel 9 der Fahrzeug-Transceiver-Einrichtung 1 jeweils detektiert und gespeichert ist und anhand des Vergleichs der Prüf-Sendeleistungspegel 9 untereinander am Ende des Prüfvorgangs eine Einstellung der Antennen-Diversity-Einrichtung 1 gewählt ist, mit welcher ein kleinerer Sendeleistungspegel 5 detektiert ist.

In der Antennen-Diversity-Einrichtung 1 können folgende Baueinheiten enthalten sein.
- eine Mehrantennenanlage 12, bestehend aus einer Vielzahl von Antennenelementen 34a, 34b, 34c,..... auf dem Fahrzeug
- eine Diversity-Steuereinrichtung 10 mit nachfolgenden Baueinheiten
- mindestens ein steuerbarer Antennen-Kombiner 11 mit dem Kombiner-Signalanschluss 18 und mit dem Steueranschluss 8 zur gesteuerten Einstellung unterschiedlicher Strahlungs-Richtwirkungen der Mehrantennenanlage 12, an welche die Antennenelementen 34a, 34b, 34c,... der Mehrantennenanlage 12 angeschlossen sind.
- ein verlustarmes Mehrtor-Koppelelement 13, dessen erstes Tor 14 mit dem Hochfrequenzanschluss 3 der Fahrzeug-Transceiver -Einrichtung 2 und dessen zweites Tor 15 mit dem Kombiner- Signalanschluss 18 verbunden ist, wobei zwischen dem ersten Tor 14 und dem zweiten Tor 15 eine starke Kopplung besteht und mindestens ein weiteres, mit Sendesignal-Tor 16 bezeichnetes Tor mit schwacher Ankopplung an das erste Tor 14 vorhanden ist.
- ein Leistungspegel-Detektor 6, welcher eingangsseitig mit dem Sendesignal-Tor 16 verbunden ist
- mindestens ein Mikroprozessor mit Speicher 20, welcher eingangsseitig mit dem Ausgang des Leistungspegel-Detektors 6 und ausgangsseitig mit dem Steuereingang 8 des steuerbaren Antennen-Kombiners 11 verbunden ist
- im Mikroprozessor mit Speicher 20 ist ein Algorithmus zur Ansteuerung des steuerbaren Antennen-Kombiners 11 abgelegt, durch welchen nach Ablauf eines Prüfvorgangs jeweils ein kleinerer Sendeleistungspegel 5 vom Leistungspegel-Detektor 6 angezeigt ist.

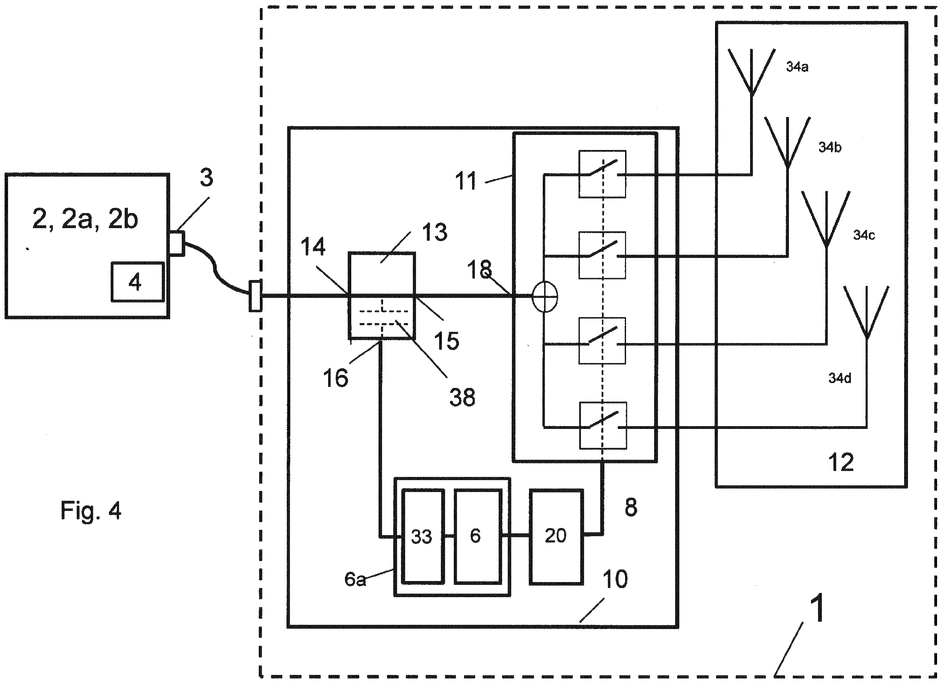

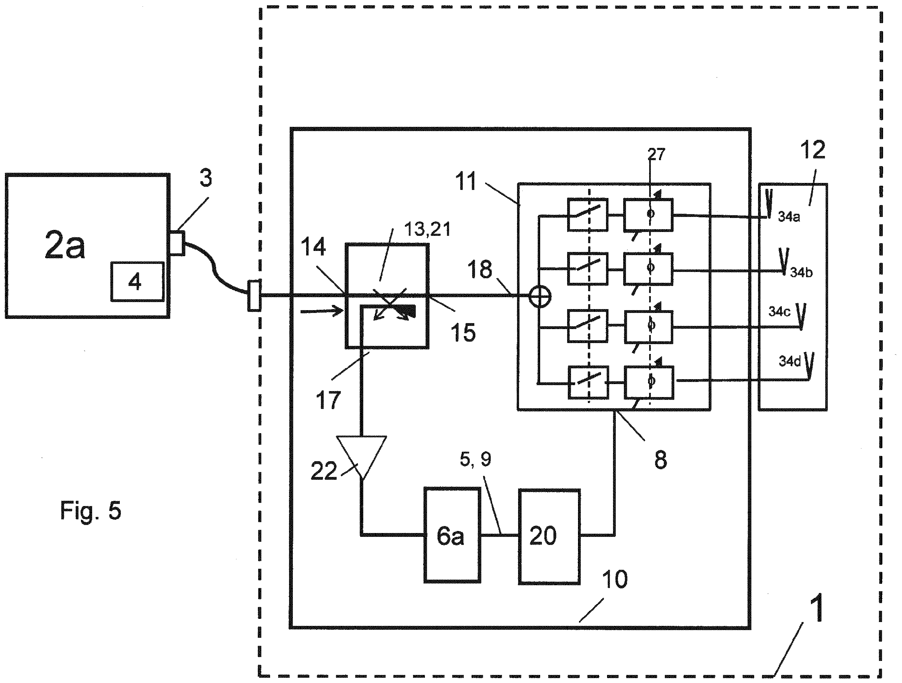

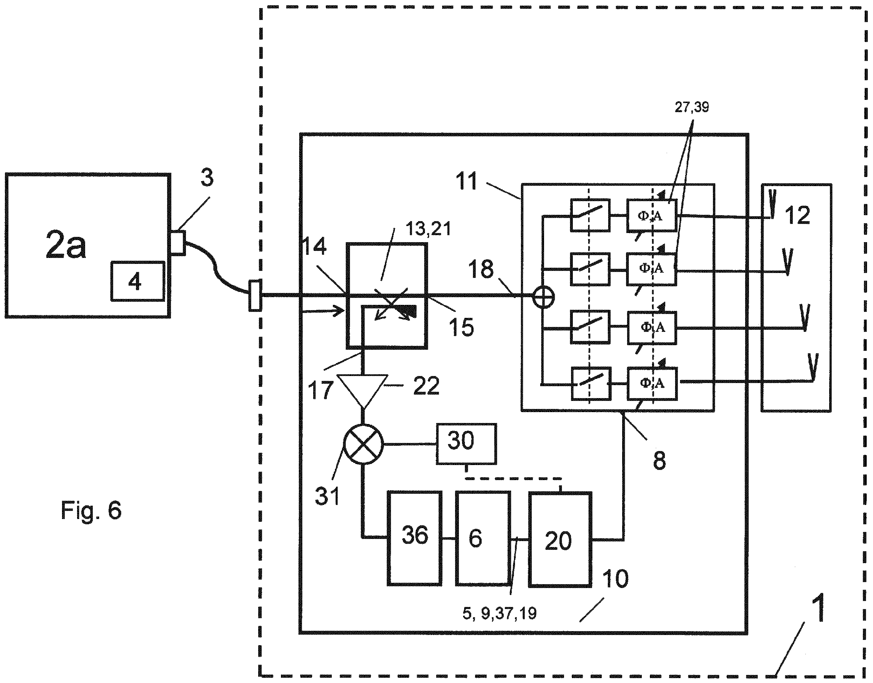

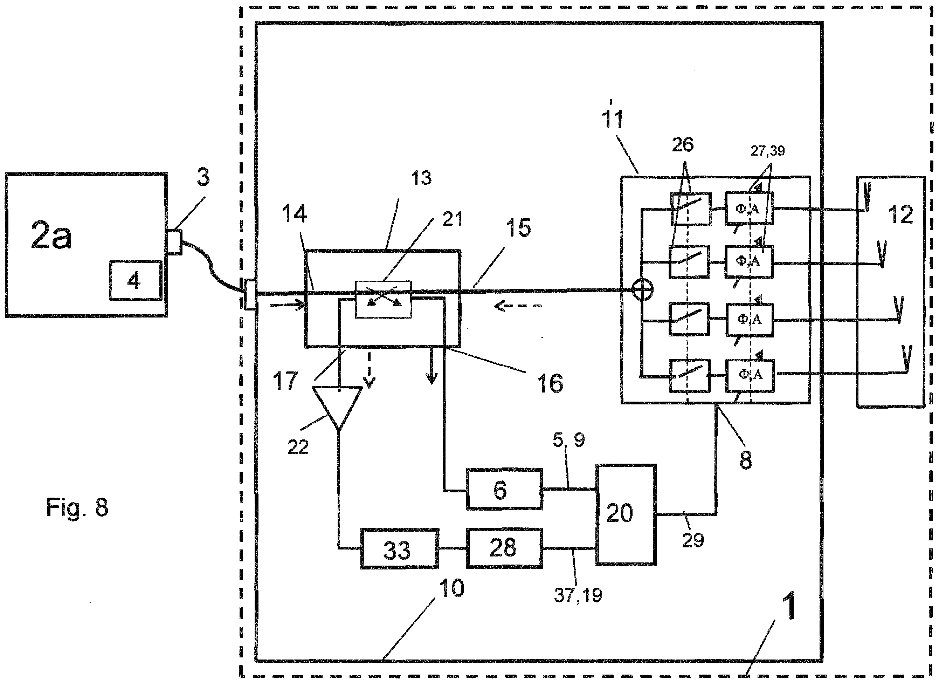

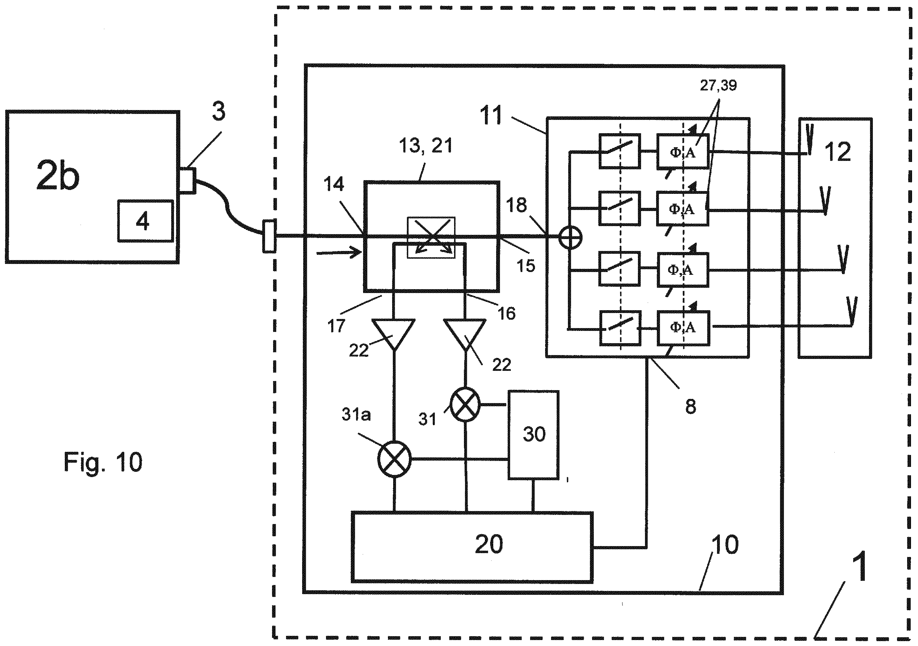

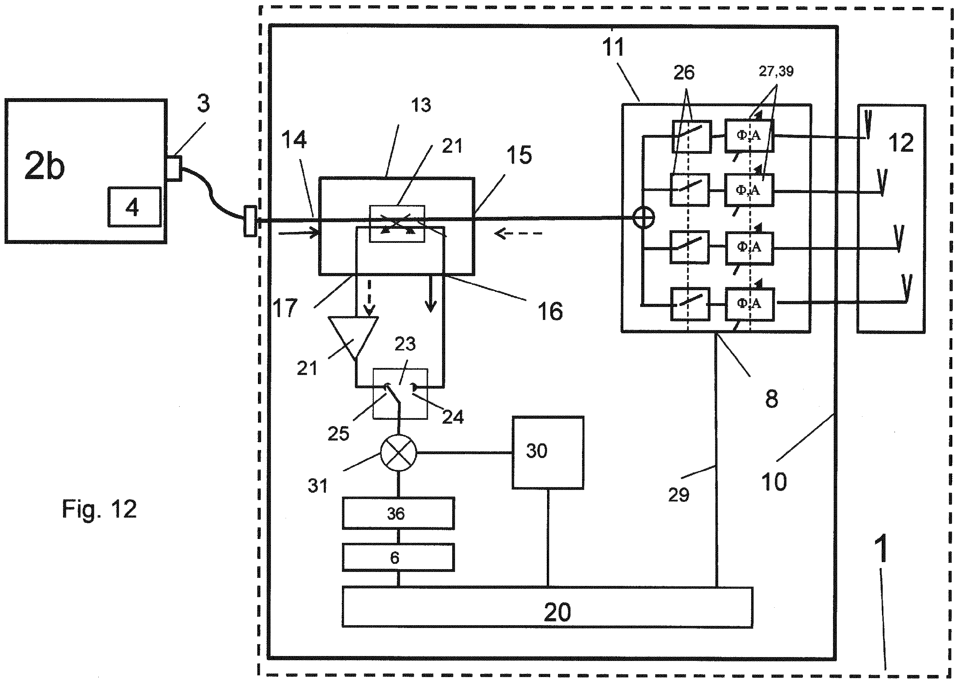

Weitere optionale Merkmale sind dadurch gekennzeichnet, dass:
die Verbindung zwischen dem ersten Tor (14) und dem zweiten Tor (15) elektrisch leitend gestaltet ist und die schwache Ankopplung des Sendesignal-Tores (16) durch eine Kapazität (19) gegeben ist. *(**Fig.4**),* und/oder dass
am Empfangssignal-Tor (17) das um die Koppeldämpfung verminderte Empfangssignal sowie das um die Richtdämpfung des Richtkopplers (21) verminderte Sendesignal entnommen ist, und ein Signalverstärker (22) vorhanden ist, welchem diese Signale zugeführt sind und welcher dem Leistungspegel-Detektor (6) vorgeschaltet ist, an dessen Ausgang die Prüf-Sende-Leistungspegel (9) bzw. die Prüf-Empfangsleistungspegel (19) dem Mikroprozessor (20) zur zeitsequentiellen Steuerung des steuerbaren Antennen-Kombiners (11) zugeführt sind, *(**Fig.5**)*, und/oder dass
zur Unterdrückung von Signalen außerhalb des für die Kommunikation vorgesehenen Frequenzbandes ein Frequenzbandfilter (33) vorhanden ist, welches dem Leistungspegel-Detektor (6) vorgeschaltet ist *(**Fig.4**),* und/oder dass zur Unterstützung des Dynamikbereichs der Pegeldetektion, diese in einer niedrigeren Zwischenfrequenz-Ebene gegeben ist, wobei hierfür ein Frequenzmischer (31) mit einem vom Mikroprozessor mit Speicher (20) spannungsgesteuerter Oszillator (30) vorhanden ist, durch welchen die Empfangs-bzw. Sendesignale in eine niedrigere Zwischenfrequenz-Ebene umgesetzt sind und in dem Leistungspegel-Detektor (6), welchem ein ZF-Frequenzkanal-Bandfilter (36) vorgeschaltet ist, die Pegeldetektion zur Verarbeitung im Mikroprozessor mit Speicher (20) gegeben ist *(**Fig.6**),* und/oder dass
jedoch zur getrennten Detektion der an dem Sendesignal-Tor (17) vorwiegend anliegenden Sendesignale und der an dem Empfangssignal-Tor (16) vorwiegend anliegenden Empfangssignale für die Detektion der Prüf-Sendeleistungspegel (5, 9) ein Leistungspegel-Detektor (6) und für die Detektion der Empfangsleistungspegel (39, 19) ein gesonderter Empfangsleistungspegel-Detektor (28) mit vorgeschaltetem Frequenzbandfilter (33) zur Unterdrückung von Außerbandsignalen vorhanden sind und sowohl die Empfangsleistungspegel (39, 19) am Ausgang des Empfangsleistungspegel-Detektors (28) als auch die Sendeleistungspegel (5, 9) am Ausgang des Leistungspegel-Detektors (6) gesondert dem Mikroprozessor mit Speicher (20) zur Steuerung des steuerbaren Antennen-Kombiners (11) zugeleitet sind *(**Fig.8**),* und/oder dass
jedoch zur getrennten Frequenzumsetzung der Sende-bzw. Empfangssignale ein weiterer Frequenzmischer (31a) vorhanden ist, wobei dem Frequenzmischer (31) die Signale am Sendesignal-Tor (16) und dem weiteren Frequenzmischer (31a) die Signale am Empfangssignal-Tor (17) zugeführt sind, und beide Ausgangssignale der Frequenzmischer (31, 31a) zur gleichzeitigen gezielten Ermittlung des SendeFrequenzkanals, des Sendeleistungspegels (5), des Empfangsfrequenzkanals und des Empfangsleistungspegels (35) dem Mikroprozessor mit Speicher (20) zugeführt sind *(**Fig. 10**)*, und/oder dass
jedoch zur Entlastung der Rechenleistung im Mikroprozessor mit Speicher (20) ein ZF-Frequenzkanal-Bandfilter (36) und ein diesem nachgeschalteter Leistungs-Pegeldetektor (6) vorhanden sind und die ZF-Ausgangssignale des Frequenzmischers (31) dem ZF- Frequenzkanal-Bandfilter (36) zur Feststellung des Leistungspegels im Leistungspegel-Detektor (6) zugeführt sind, dessen Anzeige dem Mikroprozessor mit Speicher (20) zugeführt ist, in welchem ein Frequenz-Suchalgorithmus zur Steuerung des spannungsgesteuerten Oszillators (30) in der Weise abgelegt ist, dass aus dem Zusammenhang zwischen der eingestellten Oszillatorfrequenz, der Zwischenfrequenz und den Leistungspegelwerten sowohl die Sende-Kanalfrequenz als auch die Empfangs-Kanalfrequenz ermittelt und abgelegt ist *(**Fig. 12**),* und/oder dass
jedoch sowohl die Empfangssignale als auch die um die Richtdämpfung zusätzlich verminderten Sendesignale am Empfangssignal-Tor (17) dem Frequenzmischer (31) zugeführt sind, und/oder dass
der im Mikroprozessor mit Speicher (20) abgelegte Algorithmus zur Ansteuerung der Antennen-Diversity-Einrichtung (1) in der Weise gestaltet ist, dass über Prüfzyklen alternierend die Prüf-Sendeleistungspegel (9) auf der Sende-Kanalfrequenz und die Prüf-Empfangsleistungspegel (19) auf der Empfangs-Kanalfrequenz ermittelt sind und diejenige Einstellung ausgewählt ist, bei welcher das Verhältnis von Empfangsleistungspegel (35) zu Sendeleistungspegel über alle Prüfzyklen gemessen am größten ist, und/oder dass
im Mikroprozessors mit Speicher (20) für die Durchführung eines Prüfvorgangs die aufeinanderfolgenden Prüfeinstellungen der Antennen-Diversity-Einrichtung 1 für die Prüfschritte zu Ermittlung der Einstellungen für einen niedrige Sendeleistungspegel (5) bzw. einen hohen Empfangsleistungspegel (37) nach einem vorgegebenen, im Mikroprozessors mit Speicher (20) abgelegten Algorithmus abgelegt sind *(**Fig. 5**),* und/oder dass
jedoch in der Fahrzeug-Transceiver-Einrichtung eine Sende-Leistungspegel-Regeleinrichtung nicht besteht und die bidirektionale Kommunikation auf einem Sende-Empfangskanal vorgesehen ist, wobei im Mikroprozessor mit Speicher (20) während eines Sende-Zeitschlitzes der Sendekanal festgestellt ist, und mit der zugehörigen Einstellung der Oszillatorfrequenz des spannungsgesteuerten Oszillators (30) während eines Empfangs-Zeitschlitzes der Empfangs-Leistungspegel 35 erfasst ist, und während der Empfangs-Zeitschlitze der bidirektionalen Kommunikation in der Antennen-Diversity-Einrichtung (1) im Rahmen eines Prüfvorgangs in aufeinanderfolgenden Prüfschritten jeweils in der Weise eine andere Einstellung der Antennen-Diversity-Einrichtung (1) gewählt ist, dass der bei jeder Prüfeinstellung auftretende Empfangs-Leistungspegel (35) als Prüf-Empfangsleistungspegel (19) jeweils detektiert und gespeichert ist und anhand des Vergleichs der Prüf- Empfangs-Leistungspegel (35) untereinander am Ende des Prüfvorgangs eine Einstellung der Strahlungs-Richtwirkung der Antennen-Diversity-Einrichtung gewählt ist, mit welcher ein größerer Empfangs-Leistungspegel (35) detektiert ist (Fig. 6).

Die Fahrzeug-Transceiver-Einrichtung 2 für Senden und Empfang kann für denselben Frequenzkanal gestaltet sein und der im Mikroprozessor mit Speicher 20 abgelegte Algorithmus zur Ansteuerung der Antennen-Diversity-Einrichtung 1 kann in der Weise gestaltet sein, dass bei Überschreitung eines vorgegebenen Sende-Empfang-Pegelschwellwerts am Ausgang des Leistungspegel-Detektors 6 ein Sende-Zeitschlitz erkannt ist, während dessen die Einstellung der Antennen-Diversity-Einrichtung 1 für einen kleineren Sendeleistungspegel 5 durch den Mikroprozessor mit Speicher 20 gegeben ist.

Die Verbindung zwischen dem ersten Tor 14 und dem zweiten Tor 15 kann elektrisch leitend gestaltet und die schwache Ankopplung des Sendesignal-Tores 16 kann durch eine Kapazität 19 gegeben sein.

Zur gerichteten Signalankopplung des Leistungspegel-Detektors 6 für die Feststellung des Leistungspegels kann ein Richtkoppler 21 mit geringfügiger Einfügungsdämpfung zwischen seinem ersten Tor 14 und seinem zweiten Tor 15 vorhanden sein und der Richtkoppler 21 mit seinem ersten Tor 14 und seinem zweiten Tor 15 zwischen dem Hochfrequenz Anschluss 3 und dem Kombiner-Signalanschluss 18 geschaltet sein derart, dass zwischen dem ersten Tor 14 und dem zweiten Tor 15 die kleine Einfügungsdämpfung besteht und am Sendesignal-Tor 16 kann der um den Kopplungsfaktor des Richtkopplers 2 reduzierte Sendeleistungspegel 5 mit dem Leistungspegel-Detektor 6 detektiert sein.

Am Richtkoppler 2 kann ein weiteres, mit Empfangssignal-Tor 17 bezeichnetes Tor für den gerichteten Empfang der um den Kopplungsfaktor verminderten Empfangssignale und der um den Richtfaktor des Richtkopplers 21 weiter abgeschwächten Sendesignale der Antennen-Diversity-Einrichtung 1 vorhanden sein.

Sowohl die Sendesignale als auch die Empfangssignale am Empfangssignale-Tor 17 können dem Leistungspegel-Detektors 6 zugeführt sein, und für die bidirektionale zeitsequenzielle Sende-Empfangs-Kommunikation auf demselben Frequenzkanal kann im Mikroprozessor mit Speicher 20 ein Sende-Empfangs-Pegelschwellwert eingerichtet sein, und der Algorithmus zur Ansteuerung der Antennen-Diversity-Einrichtung 1 kann in der Weise gestaltet sein, dass bei Unterschreitung des vorgegebenen Sende-Empfangs-Pegelschwellwerts am Ausgang des Leistungspegel-Detektors 6 ein Empfangs-Zeitschlitz erkannt ist, während dessen die Einstellung der Antennen-Diversity-Einrichtung 1 durch den Mikroprozessor mit Speicher 20 im Rahmen eines Prüfvorgangs in aufeinanderfolgenden Prüfschritten jeweils eine andere Einstellung der Antennen-Diversity-Einrichtung 1 gewählt ist und der bei jeder Prüfeinstellung der Antennen-Diversity-Einrichtung 1 auftretende Empfangsleistungspegel 18 als Prüf-Empfangsleistungspegel 19 der Fahrzeug-Transceiver-Einrichtung 1 jeweils detektiert und registriert ist und anhand des Vergleichs der Prüf-Empfangsleistungspegel 19 untereinander kann am Ende des Prüfvorgangs eine Einstellung der Antennen-Diversity-Einrichtung 1 gewählt sein, mit welcher ein größerer Empfangsleistungspegel 35 erreicht ist, und bei Überschreitung des vorgegebenen Sende-Empfangs-Pegelschwellwerts kann nach Anspruch 3 ein kleinerer Sendeleistungspegel 5 erreicht sein.

Am Empfangssignal-Tor 17 kann das um die Koppeldämpfung verminderte Empfangssignal sowie das um die Richtdämpfung des Richtkopplers 21 verminderte Sendesignal entnommen sein, und es kann ein Signalverstärker 22 vorhanden sein, welchem diese Signale zugeführt sind und welcher dem Leistungspegel-Detektor 6 vorgeschaltet ist, an dessen Ausgang die Prüf-Sende-Leistungspegel 9 bzw. die Prüf-Empfangs-Leistungspegel 19 dem Mikroprozessor 20 zur zeitsequentiellen Steuerung des steuerbaren Antennen-Kombiners 11 zugeführt sind.

Zur Unterdrückung von Signalen außerhalb des für die Kommunikation vorgesehenen Frequenzbandes kann ein Frequenzbandfilter 33 vorhanden sein, welches dem Leistungspegel-Detektor 6 vorgeschaltet ist

Zur Unterstützung des Dynamikbereichs der Pegeldetektion kann diese in einer niedrigeren Zwischenfrequenz-Ebene gegeben sein, wobei hierfür ein Frequenzmischer 31 mit einem vom Mikroprozessor mit Speicher 20 spannungsgesteuerter Oszillator 30 vorhanden sein kann, durch welchen die Empfangs-bzw. Sendesignale in eine niedrigere Zwischenfrequenz-Ebene umgesetzt sind und in dem ZF-Leistungspegel-Detektor 6a, welchem ein ZF-Frequenzkanal-Bandfilter 36 vorgeschaltet ist, die Pegeldetektion zur Verarbeitung im Mikroprozessor mit Speicher 20 gegeben ist.

Zur selbsttätigen Frequenzabstimmung der Sende-Pegeldetektion auf einen aktiven bidirektionalen Frequenzkanal im Frequenzband kann ein vom Mikroprozessor mit Speicher 20 gesteuerter Oszillator 30 vorhanden sein, dessen Oszillatorsignal und die Sende-bzw. Empfangssignale können einem Frequenzmischer 31 zur Frequenzumsetzung in Zwischenfrequenzsignale in eine niedrigere Zwischenfrequenz-Ebene zugeführt sein und die Leistungspegel der im ZF-Leistungspegel-Detektor 6 mit ZF-Frequenzkanal-Bandfilter 36 detektierten Zwischenfrequenz-Signale können dem Mikroprozessor mit Speicher 20 zugeführt sein, durch dessen Frequenzsteuerung des Oszillators 30 der Signalinhalt der einzelnen Frequenzkanäle sequenziell ermittelt und daraufhin die Sende-und Empfangspegeldetektion auf den aktiven Frequenzkanal abgestimmt ist.

Zur getrennten Detektion der an dem Sendesignal-Tor 16 in einem Frequenzkanal innerhalb des Frequenzbandes vorwiegend anliegenden Sendesignale und der an dem Empfangssignal-Tor 17 in einem Frequenzkanal innerhalb des Frequenzbandes vorwiegend anliegenden Empfangssignale kann ein vom Mikroprozessor mit Speicher 20 elektronisch gesteuerter Umschalter 23 zur wechselweisen zeitsequenziellen Weiterleitung der Sende- bzw. Empfangs-Signale an den Leistungspegel-Detektor 6 vorhanden sein, welchem ein Frequenzbandfilter 33 zur Unterdrückung von Außerband-Signalen vorgeschaltet sein kann.

Zur getrennten Detektion der an dem Sendesignal-Tor 17 vorwiegend anliegenden Sendesignale und der an dem Empfangssignal-Tor 16 vorwiegend anliegenden Empfangssignale für die Detektion der Prüf-Sendeleistungspegel 9 und der Prüf-Empfangsleistungspegel 19 können ein Leistungspegel-Detektor 6 und ein gesonderter Empfangsleistungspegel-Detektor 28 mit vorgeschaltetem Frequenzbandfilter 33 zur Unterdrückung von Außerbandsignalen vorhanden sein und sowohl die Prüf-Empfangsleistungspegel 19 am Ausgang des Empfangsleistungspegel-Detektors 28 als auch die Prüf-Sendeleistungspegel 9 am Ausgang des Leistungspegel-Detektors 6 können gesondert dem Mikroprozessor mit Speicher 20 zur Steuerung des steuerbaren Antennen-Kombiners 11 zugeleitet sein. Die Fahrzeug-Transceiver-Einrichtung 2, 2b für Senden und Empfang kann für Senden und Empfang auf unterschiedlichen Frequenzkanälen eingerichtet sein, und zur Erkennung der Sende-Kanalfrequenz und der Empfangs-Kanalfrequenz im Mikroprozessor mit Speicher 20 kann ein Frequenz-Suchalgorithmus abgelegt sein zur Steuerung eines spannungsgesteuerten Oszillators 30, dessen Oszillatorsignal mit den Sende-bzw. Empfangssignalen im Frequenzmischer 31 in ZF-Ausgangssignale mit niedrigerer Frequenz umgesetzt sind, welche dem Mikroprozessor mit Speicher 20 zugeführt und dort rechnerisch analysiert sind - somit können auch die Sende-Kanalfrequenz und die Empfangs-Kanalfrequenz im Mikroprozessor mit Speicher 20 abgelegt sein.

Es kann zur getrennten Frequenzumsetzung der Sende-bzw. Empfangssignale ein weiterer Frequenzmischer 31a vorhanden sein, wobei dem Frequenzmischer 31 die Signale am Sendesignal-Tor 16 und dem weiteren Frequenzmischer 31a die Signale am Empfangssignal-Tor 17 zugeführt sein können, und beide Ausgangssignale der Frequenzmischer 31, 31a zur gleichzeitigen gezielten Ermittlung des SendeFrequenzkanals, des Sendeleistungspegels 5, des Empfangsfrequenzkanals und des Empfangsleistungspegels 35 dem Mikroprozessor mit Speicher 20 zugeführt ein können.

Zur Entlastung der Rechenleistung im Mikroprozessor mit Speicher 20 können ein ZF-Frequenzkanal-Bandfilter 36 und ein diesem nachgeschalteter Leistungs-Pegeldetektor 6 vorhanden sein, und die ZF-Ausgangssignale des Frequenzmischers 31 können dem ZF-Frequenzkanal-Bandfilter 36 zur Feststellung des Leistungspegels im ZF-Leistungs-Pegeldetektor 6a zugeführt sein, dessen Anzeige dem Mikroprozessor mit Speicher 20 zugeführt sein kann, in welchem ein Frequenz-Suchalgorithmus zur Steuerung des spannungsgesteuerten Oszillators 30 in der Weise abgelegt sein kann, dass aus dem Zusammenhang zwischen der eingestellten Oszillatorfrequenz, der Zwischenfrequenz und den Leistungspegelwerten sowohl die Sende-Kanalfrequenz als auch die Empfangs-Kanalfrequenz ermittelt und abgelegt sein kann.

Zur weiteren Entlastung der Rechenleistung des Mikroprozessors mit Speicher 20 kann eine Zwischenfrequenz-Filterbank 32 mit ZF-Frequenzkanal-Bandfiltern entsprechend den einzelnen Frequenzkanälen des Frequenzbandes vorhanden sein, welche dem ZF-Ausgang des Frequenzmischers 31 nachgeschaltet sein kann und dessen Filter-Ausgangssignale dem Mikroprozessor mit Speicher 20 zugeführt sein kann, und der im Mikroprozessor mit Speicher 20 abgelegte Frequenz-Suchalgorithmus kann in der Weise gestaltet sein, dass über die schrittweise Steuerung der Frequenz des spannungsgesteuerten Oszillators 30 die aktiven Kanäle durch rechnerische Feststellung der bei den einzelnen Kanalfrequenzen auftretenden Sendepegel in Schalterstellung 24 bzw. der Empfangspegel in Schalterstellung 25 im Mikroprozessor mit Speicher 20 ermittelt und dort abgelegt sind.

Sowohl die Empfangssignale als auch die um die Richtdämpfung zusätzlich verminderten Sendesignale am Empfangssignal-Tor 17 können dem Frequenzmischer 31 zugeführt sein.

Der im Mikroprozessor mit Speicher 20 abgelegte Algorithmus zur Ansteuerung der Antennen-Diversity-Einrichtung 1 kann in der Weise gestaltet sein, dass in einer Taktfolge jeweils über Prüfzyklen alternierend die Einstellung der Antennen-Diversity-Einrichtung 1 für einen kleineren Sende-Leistungspegel 5 bei der Sende-Kanalfrequenz und die Einstellung der Antennen-Diversity-Einrichtung 1 für einen größeren Empfangs-Leistungspegel 35 bei der Empfangs-Kanalfrequenz gegeben ist.

Der im Mikroprozessor mit Speicher 20 abgelegte Algorithmus zur Ansteuerung der Antennen-Diversity-Einrichtung 1 kann in der Weise gestaltet sein, dass über Prüfzyklen alternierend die Prüf-Sendeleistungspegel 9 auf der Sende-Kanalfrequenz und die Prüf-Empfangsleistungspegel 19 auf der Empfangs-Kanalfrequenz ermittelt sind und diejenige Einstellung ausgewählt ist, bei welcher das Verhältnis von Empfangsleistungspegel 35 zu Sendeleistungspegel über alle Prüfzyklen gemessen am größten ist.

Die Mehrantennenanlage 12 kann mindestens zwei Einzelantennen 34a, 34b enthalten und der steuerbare Antennen-Kombiner 11 kann steuerbare Antennenumschalter 26 enthalten, und kann einerseits jeweils mit dem Kombiner-Signalanschluss 18 und andererseits mit jeweils mindestens einer der Einzelantennen 34a, 34b ... verbunden sein, deren zugehörige Schalterstellungen kombiniert über die Kombiner-Einstellsignale 29 des Mikroprozessors mit Speicher 20 am Steueranschluss 8 eingestellt sind, sodass über unterschiedliche Schalterstellungen unterschiedliche Strahlungs-Richtwirkungen eingestellt sind.

Im steuerbaren Antennen-Kombiner 11 können einstellbare Phasendrehglieder 27 vorhanden sein, sodass die Einzelantennen 34a, 34b,34c.. über die einstellbaren Antennenumschalter 26 und die einstellbare Phasendrehglieder 27 am Kombiner-Signalanschluss 18 unterschiedlich einstellbar kombiniert sind und über unterschiedliche Schalterstellungen und unterschiedliche Einstellungen der einstellbaren Phasendrehglieder 27 über die Kombiner-Einstellsignale 29 des Mikroprozessors mit Speicher 20 am Steueranschluss 8 unterschiedliche Strahlungs-Richtwirkungen eingestellt sind.

Im Mikroprozessor mit Speicher 20 können für die Durchführung eines Prüfvorgangs die aufeinanderfolgenden Prüfeinstellungen für die Prüfschritte zu Ermittlung der Einstellungen für einen niedrige Sendeleistungspegel 5 bzw. einen hohen Empfangsleistungspegel 35 nach einem vorgegebenen, im Mikroprozessor mit Speicher 20 abgelegten Algorithmus abgelegt sein.

Die Mehrantennenanlage 12 kann aus einer Anzahl von N > 2 vertikal polarisierten Monopolantennen 34a, 34b,.. mit dem elektrisch leitenden horizontal orientierten Dach eines Fahrzeugs als elektrisches Gegengewicht der Monopolantennen 34a, 34b,.. gebildet sein, wobei die Monopolantennen 34a, 34b,.. auf der Unterseite des Daches im Fahrgastinnenraum um einen zentralen Punkt als Kreisgruppe derart angeordnet sind, dass durch sie im Wesentlichen ein reguläres N- Eck gebildet ist.

Es kann sein, dass in der Fahrzeug-Transceiver-Einrichtung 2 eine Sende-Leistungspegel-Regeleinrichtung nicht besteht und die bidirektionale Kommunikation auf nur einem Sende-Empfangskanal durchgeführt wird, wobei im Mikroprozessor mit Speicher 20 während eines Sende-Zeitschlitzes der Sendekanal festgestellt ist, und mit der zugehörigen Einstellung der Oszillatorfrequenz des spannungsgesteuerten Oszillators 30 während eines Empfangs-Zeitschlitzes der Empfangs-Leistungspegel 35 erfasst ist, und während der Empfangs-Zeitschlitze der bidirektionalen Kommunikation in der Antennen-Diversity-Einrichtung 1 im Rahmen eines Prüfvorgangs in aufeinanderfolgenden Prüfschritten jeweils in der Weise eine andere Einstellung der Antennen-Diversity-Einrichtung 1 gewählt ist, dass der bei jeder Prüfeinstellung auftretende Empfangs-Leistungspegel 35 als Prüf-Empfangsleistungspegel 19 jeweils detektiert und gespeichert ist und anhand des Vergleichs der Prüf- Empfangs-Leistungspegel 35 untereinander am Ende des Prüfvorgangs eine Einstellung der Strahlungs-Richtwirkung der Antennen-Diversity-Einrichtung gewählt ist, mit welcher ein größerer Empfangs-Leistungspegel 35 detektiert ist.

Der große mit der vorliegenden Erfindung erreichte Vorteil besteht darin, dass eine Antennen-Diversity-Einrichtung 1 an den Hochfrequenzanschluss 3 eines vorgegebenen Transceiver-Einrichtung 2 geschaltet werden kann und ohne durch die Transceiver-Einrichtung 2 in besonderer Weise durch Steuersignale angesteuert, die Einstellung der Antennen-Diversity-Einrichtung durch sukzessive Prüfeinstellungen selbsttätig vornimmt mit dem Ergebnis, die bidirektionale digitale Kommunikation effektiver, d. h. z.B. mit kleinerer Bitfehlerrate im Empfangssignal zu gestalten. Dabei kann die Antennen-Diversity-Einrichtung 1 im Rahmen der vorgegebenen Frequenzbandbreite (z.B. 70 MHz) breitbandig gestaltet sein, sodass die Einstellung der Antennen-Diversity-Einrichtung 1 und damit die Richtwirkung der Mehrantennenanlage 12 - über die Ansteuerung des Antennen-Kombiners 12 - zu der gewünschten Verringerung der Bitfehlerrate, ohne Voreinstellung der Antennen-Diversity-Einrichtung 1 auf die Frequenz des aktiven Frequenzkanals bzw. der aktiven Frequenzkanäle, auf denen Kommunikation stattfindet, führt. Als Grundlage für die Steuerung der Antennen-Diversity-Einrichtung 1 dient erfindungsgemäß die Qualität der bidirektionalen Kommunikationsverbindung welche sich im Sende-Leistungspegel 5 der vorgegebenen Transceiver-Einrichtung 2 ausdrückt. Der Zusammenhang zwischen der Qualität der bidirektionalen Kommunikationsverbindung und des abgegebenen Sende- Leistungspegels 5 kann dabei in der vorgegebenen Transceiver-Einrichtung 2 unterschiedlich aus der Größe des Empfangssignals, der Bitfehlerrate im Empfangssignale oder einem ähnlichen Kriterium abgeleitet sein. Für die vorliegende Erfindung besonders wesentlich ist der Zusammenhang, dass in der Transceiver-Einrichtung 2 eine Sende-Leistungspegel-Regeleinrichtung 4 in der Weise eingerichtet ist, dass mit Absinken der Qualität der Kommunikationsverbindung der Sende-Leistungspegel 5 größer eingestellt ist und umgekehrt mit steigender Qualität der Kommunikationsverbindung abgesenkt ist.

Ein weiterer Vorteil der erfindungsgemäßen Antennen-Diversity-Einrichtung 1 besteht auch dann, wenn der Sende-Frequenzkanal und der Empfangs-Frequenzkanal in der Frequenz unterschiedlich sind und Senden und Empfang gleichzeitig stattfinden. Auch in diesem Fall findet das System aufgrund der Vielfalt der möglichen Strahlungs-Richtwirkungen jeweils eine Einstellung, welche eine Verbesserung der Übertragungsqualität gegenüber dem Einsatz einer Einzelantenne herbeiführt, obgleich eine gesonderte optimale Einstellung jeweils für Senden und Empfang nicht möglich ist.

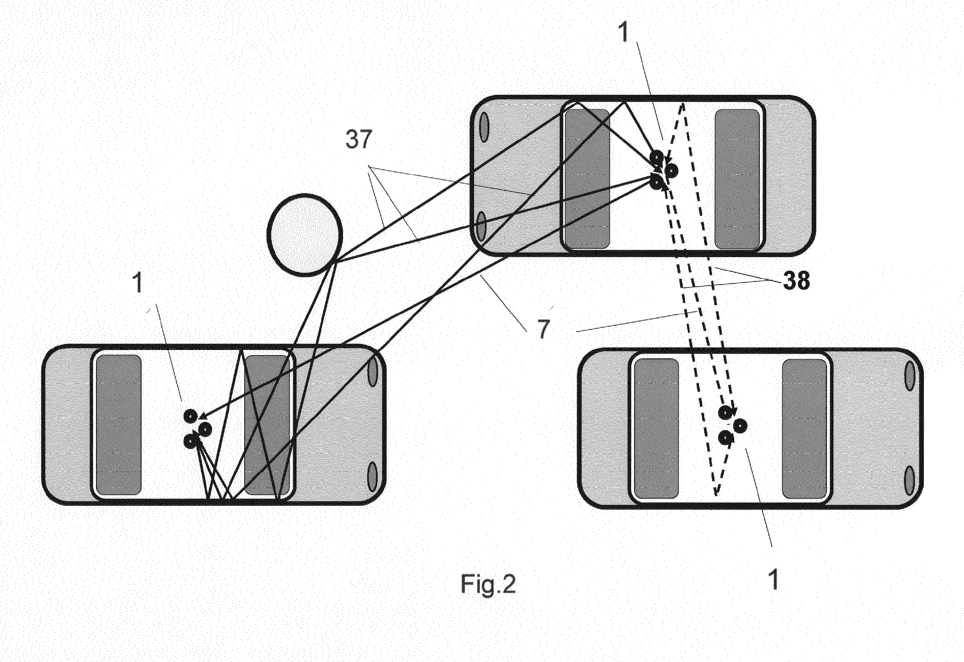

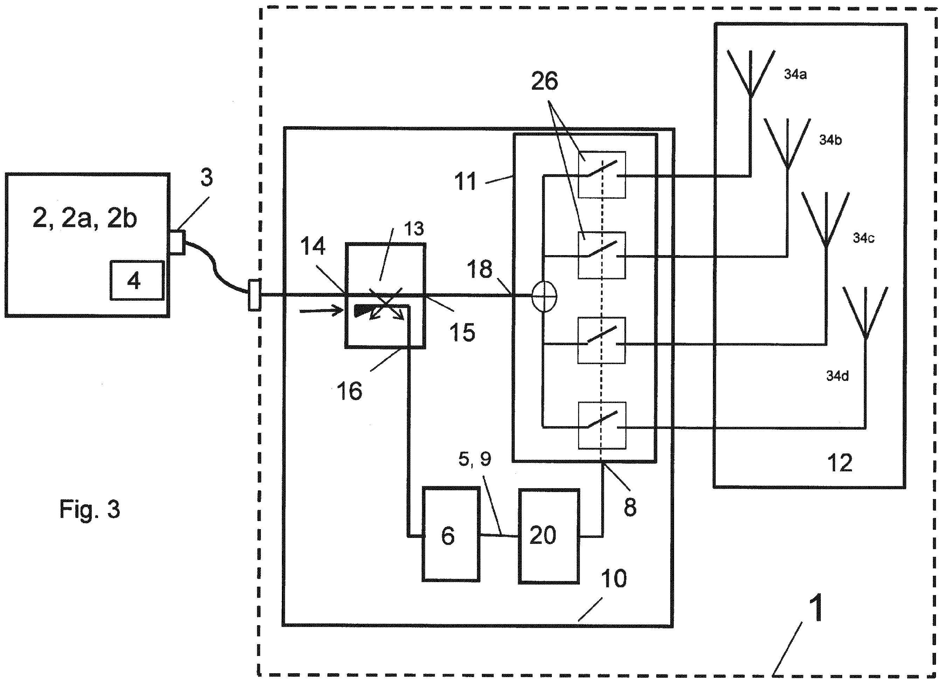

Die Steuerung und die Erreichung unterschiedlicher Einstellungen für die Strahlungs-Richtwirkung der Mehrantennenanlage 12 kann auf eine Vielzahl unterschiedlicher Weisen erreicht werden. Zum Beispiel durch wechselweises Anschalten unterschiedlich platzierte Antennen auf dem Fahrzeug, bzw. durch über den steuerbaren Antennen-Kombiner 11 gewählte unterschiedliche Einstellungen von steuerbaren Antennenumschaltern 26 und steuerbaren Phasendrehgliedern 27 und durch viele weitere mögliche Diversity- Anordnungen von Kombiner-Mehrantennenanlagen 11,12. Eine einfache Mehrantennenanlage 12 kann - wie in Figur 2 dargestellt - zum Beispiel aus drei vertikalen Monopolantennen in geeignetem Abstand voneinander auf der Unterseite des Daches - also im Innenraum - eines Fahrzeugs platziert, gebildet sein. Erfindungsgemäß sind diese Monopolantennen als Kreisgruppe mit einem Kreisdurchmesser von zum Beispiel 0,2-0,75 λ (Freiraumwellenlänge) um einen zentralen Punkt, vorzugsweise im mittleren Bereich des Fahrzeugdaches angeordnet. Hierbei ist vorausgesetzt, dass das Fahrzeugdach zumindest in einem Bereich von mehreren Freiraumwellenlängen λ metallisch leitend gestaltet ist. In einem einfachen Fall besteht die Kreisgruppe aus vier Monopolantennen, wie in Figur 2 dargestellt. Bereits durch wechselweises bzw. kombiniertes Anschalten der einzelnen Antennen 34a, 34b, 34c über die Schalter 26 im steuerbaren Antennen-Kombiner 11 - zum Beispiel wie in den Figuren 3 und 4 - lassen sich aufgrund der Gangunterschiede der elektromagnetischen Wellen unterschiedliche Richtwirkungen der Mehrantennenanlage 12 einstellen. Die Diversifizierung der Richtwirkungen lässt sich weiter erheblich erhöhen, wenn im steuerbaren Antennen-Kombiner 11 zusätzlich steuerbare Phasendrehglieder Φ, 27 - wie in Figur 5 - und gegebenenfalls Amplituden-Einstellglieder A, 39 - wie in den Figuren 6 - 12 angedeutet - vorhanden sind, durch welche die Antennen 34a, 34b, 34c kombiniert und steuerbar verschaltet sind. Mithilfe der vorgesehenen empirisch gewählten Prüfeinstellungen des Antennen-Kombiners 11 sucht die Antennen-Diversity-Einrichtung 1 selbsttätig anhand der Detektion des Sende-Leistungspegels 5 eine für den Moment günstige Einstellung der Strahlungs-Richtwirkung zur Verbesserung der Qualität der bidirektionalen Kommunikation. Eine für den Moment günstige Strahlungs-Richtwirkung zielt weniger auf eine Hauptkeule des Strahlungs-Richtdiagramms in Richtung auf den Kommunikationspartner sondern vielmehr auf die positive summarische Überlagerung aller aufgrund der Mehrwegeausbreitung aus den verschiedenen Raumrichtungen einfallenden bzw. in die verschiedenen Richtungen ausgesendeten Wellen.

Nachfolgend ist die Erfindung anhand einiger Ausführungsbeispiele in den Figuren weiter erläutert.

Es zeigen:
Fig. 1: Beispiel eines Szenarios der bidirektionalen Fahrzeug-zu-Fahrzeug-Kommunikation zwischen drei Fahrzeugen mit jeweils einer Antenne nach dem Stand der Technik auf dem Fahrzeugdach. Die ausgezogenen Linien beschreiben die Ausbreitungswege der elektromagnetischen Wellen zwischen einem ersten Fahrzeug und einem zweiten Fahrzeug in einem ersten Frequenzkanal. Die unterbrochenen Linien beschreiben entsprechend die Ausbreitung zwischen dem ersten Fahrzeug und einem dritten Fahrzeug in einem anderen Frequenzkanal. Die Darstellung verdeutlicht die Beiträge der Umweg-Wellen 37 zu den Direkt-Wellen 7, sowie der Umweg-Wellen 38 im eigenen Fahrzeug wie weiter oben bereits beschrieben.
Fig. 2: Beispiel eines Szenarios der bidirektionalen Fahrzeug-zu-Fahrzeug-Kommunikation zwischen drei Fahrzeugen wie in Figur 1, jedoch mit einer Antennen-Diversity-Einrichtung 1 nach der Erfindung mit dem Beispiel einer einfachen Mehrantennenanlage 12, bestehend aus drei auf dem Fahrzeugdach befindlichen und im geeignetem Abstand voneinander platzierten vertikalen Monopolantennen. Die dargestellte Mehrwegeausbreitung verdeutlicht den Sachverhalt, dass die Ausbildung einer Hauptkeule des Richtdiagramms in Richtung desjenigen Fahrzeugs, mit welchem die bidirektionale Kommunikation stattfindet, sehr häufig keine günstige Einstellung der Richtwirkung der Mehrantennenanlage 12 erwarten lässt.
Fig. 3: Für den gesamten Frequenzbereich breitbandig gestaltete Antennen-Diversity-Einrichtung 1 nach der Erfindung für eine Transceiver- Einrichtung 2 mit Sende-Leistungspegel-Regeleinrichtung 4, welche wahlweise als Transceiver-Einrichtung 2a für einen Frequenzkanal für Senden und Empfang sequenziell in aufeinanderfolgenden Zeitschlitzen, oder als Transceiver- Einrichtung 2b für gleichzeitiges Senden und Empfangen in unterschiedlichen Frequenzkanälen ausgelegt ist. Die Antennen-Diversity-Einrichtung 1 ist an den Hochfrequenzanschluss 3 angeschlossen, dessen Signale der Diversity-Steuereinrichtung 10 zugeführt sind. Diese beinhaltet den steuerbaren Antennen-Kombiner 11 mit Schaltern 26, durch welche die Mehrantennenanlage 12, bestehend aus den Antennenelementen 34a, 34b, .. 34d, eingestellt ist. Die Hochfrequenzsignale am Hochfrequenzanschluss 3 sind über das erste Tor 14 und das mit diesem über den Hauptstrang mit geringer Durchgangsdämpfung verbundene zweite Tor 15 eines Mehrtor-Koppelelements 13 mit dem Kombiner-Signalanschluss 18 des steuerbaren Antennen-Kombiners 11 für das Senden bzw. für den Empfang verbunden. Das Mehrtor-Koppelelement 13 verfügt über ein weiteres mit Sendesignal-Tor 16 bezeichnetes Tor, welches zur Auskopplung des Sendesignals der Transceiver- Einrichtung 2 und zur Weiterleitung an den Leistungspegel-Detektor 6 lose an den Hauptstrang mit einer Koppeldämpfung von zum Beispiel 10 dB angekoppelt ist. Der am Leistungspegel-Detektor 6 detektierte Sende-Leistungspegel 5 wird im Mikroprozessor mit Speicher 20 bewertet und gespeichert. Im Mikroprozessor mit Speicher 20 ist ein Algorithmus zur Ansteuerung des steuerbaren Antennen-Kombiners 11 abgelegt, über dessen Steueranschluss 8 während der bidirektionalen Kommunikation im Rahmen eines Prüfvorgangs in aufeinanderfolgenden Prüfschritten jeweils in der Weise eine andere Einstellung der des steuerbaren Antennen-Kombiners 11 gewählt ist, dass der bei jeder Prüfeinstellung auftretende Sendeleistungspegel 5 als Prüf-Sendeleistungspegel 9 der Transceiver-Einrichtung 2 jeweils detektiert und gespeichert ist und anhand des Vergleichs der Prüf-Sendeleistungspegel 9 untereinander am Ende des Prüfvorgangs eine Einstellung der Antennen-Diversity-Einrichtung 1 gewählt ist, mit welcher ein kleinerer Sendeleistungspegel 5 detektiert ist. In dieser Ausführungsform der Antennen-Diversity-Einrichtung 1 sind keine auf den aktiven Kommunikations-Frequenzkanal beschränkende in der Frequenz selektive Elemente enthalten. Aufgrund des Größenunterschieds zwischen dem Sendesignal und dem Empfangssignal trägt letzteres vernachlässigbar bei der Detektion des Pegels am Detektor 6 bei. Somit sucht das System über die Vielzahl der Einstellmöglichkeiten stets nach einer Einstellung des Antennen-Kombiners 11, deren zugehörige Antennen-Richtwirkung über den Sende-und den Empfangsweg einen möglichst niedrigen Sende-Leistungspegel 5 und damit eine hohe Qualität der Kommunikationsverbindung mit kleiner Bitfehlerrate im Empfangssignal erreicht.
Fig. 4: Breitbandig gestaltete Antennen-Diversity-Einrichtung 1 nach der Erfindung wie in Figur 3 mit einem besonders einfach gestalteten Mehrtor-Koppelelement 13, welches zwischen dem ersten Tor 14 und dem zweiten Tor 15 als Hauptstrang in Form einer durchgehend leitende Verbindung gestaltet ist und die lose Ankopplung des Sendesignal-Tores 16 durch eine Kapazität 19 gegeben ist. Zur Unterdrückung von Störungen außerhalb des Frequenzbandes ist der Leistungspegel-Detektor 6a in der Weise selektiv gestaltet, dass dem Leistungspegel-Detektor 6 ein Frequenzbandfilter 33 - zum Beispiel mit der Frequenzbandbreite von 70 MHz - vorgeschaltet ist.
Fig. 5: Breitbandig gestaltete Antennen-Diversity-Einrichtung 1 nach der Erfindung wie in Figur 4, jedoch mit dem besonderen Unterschied, dass zunächst im Rahmen von Prüfvorgängen anhand der Suche nach kleinen Sende-Leistungspegeln 5 eine Einstellung des steuerbaren Antennen-Kombiners 11 für eine günstige Richtwirkung der Mehrantennenanlage 12 für den Sendemodus gefunden ist, um im Anschluss im Rahmen von Prüfvorgängen anhand der Suche nach großen Empfangs-Leistungspegeln 35 eine Einstellung des steuerbaren Antennen-Kombiners 11 für eine günstige Richtwirkung der Mehrantennenanlage 12 für den Empfangsmodus zu bewirken. Zur entsprechenden Steuerung des steuerbaren Antennen-Kombiners 11 ist es somit zum einen notwendig, sowohl das Vorliegen des Sendemodus bzw. Empfangsmodus als auch die Sende-Leistungspegel 5 als auch die Empfangs-Leistungspegel 35 gesondert im Mikroprozessor mit Speicher 20 zu erfassen und den steuerbaren Antennen-Kombiner 11 entsprechend zu steuern. Die gesonderte Einstellung der Richtwirkung der Mehrantennenanlage 12 für den Sendemodus und den Empfangsmodus ist naturgemäß darauf beschränkt, dass der Sendemodus und der Empfangsmodus während unterschiedlichen Zeiten vorliegen. In der vorliegenden breitbandigen Ausführungsform ist die Antennen-Diversity-Einrichtung 1 auf die Kenntnis des Sendefrequenzkanals und des Empfangsfrequenz Kanals nicht angewiesen. Beide Frequenzkanäle können somit gleich oder unterschiedlich voneinander sein.
   Hierfür ist das Mehrtor-Koppelelement 13 als Richtkoppler 21 gestaltet, mit dem ersten Tor 14 und dem zweiten Tor 15 im Hauptzweig mit geringer Einfügungsdämpfung und mit mindestens einem weiteren als Empfangssignal-Tor 17 bezeichnetes Tor mit entsprechender Koppeldämpfung (zum Beispiel 10dB) zur Entnahme der am steuerbaren Antennen-Kombiner 11 anliegenden Empfangssignale. Die Pegel der Sendesignale liegen gegenüber dem Hochfrequenzanschluss 3 an diesem Tor um die Summation aus Koppeldämpfung und Richtdämpfung des Richtkopplers 21 (also zum Beispiel um 40 dB) vermindert vor. Der Pegel der Sendesignale am Hochfrequenzanschluss 3 der Transceiver-Einrichtung 2 überragt das Empfangssignal am Kombiner-Signalanschluss 18 um mehrere Größenordnungen. Das Empfangssignal-Tor 17 ist somit geeignet, sowohl das Sendesignal als auch das Empfangssignal im Bereich ähnlicher Größenordnungen zur Verfügung zu stellen. Aufgrund der geringen Pegel der Empfangssignale ist dem frequenzbandselektiven Leistungspegel-Detektor 6a eine Signalverstärker 22 vorgeschaltet. Obgleich der Sende-Leistungspegel 5 den Empfangs-Leistungspegel 35 am Empfangssignal-Tor 17 deutlich überragt, ist der Dynamikbereich für die Pegeldetektion von Sende-und Empfangssignalen mit dieser Anordnung hinreichend gestaltbar. Dieser Größenunterschied der Signalpegel wird im Mikroprozessor mit Speicher 20 erfindungsgemäß als Kriterium für das Vorliegen des Sendemodus bzw. des Empfangsmodus jeweils erkannt. Der dort abgelegte Algorithmus steuert erfindungsgemäß anhand der Zuordnung von Sende-Leistungspegel 5 und Sende-Zeitschlitz bzw. Empfangs-Leistungspegel 35 und Empfangs-Zeitschlitz über den Steueranschluss 8 den steuerbaren Antennen-Kombiner 11 und damit die Richtwirkung der Mehrantennenanlage 12 für den Sendemodus und den Empfangsmodus.
Fig. 6: Antennen-Diversity-Einrichtung 1 nach der Erfindung wie in Figur 5, jedoch mit dem besonderen Unterschied, dass die Transceiver-Einrichtung 2 für Senden und Empfang auf ein und demselben -jedoch innerhalb des Frequenzbandes beliebigen - Frequenzkanal (Sende-Empfangskanal) eingerichtet ist.
   Zur einfacheren und genaueren Detektion der Leistungspegel und zur Erfüllung der Anforderung an die Pegeldynamik bei der Detektion werden diese für die Sende-und Empfangssignale nicht in ihrer ursprünglichen Frequenzlage - von zum Beispiel 5,9 GHz - durchgeführt. Erfindungsgemäß werden diese Signale auf eine Zwischenfrequenz umgesetzt, für welche ZF-Frequenzkanal-Bandfilter 36 mit der Frequenzbandbreite eines Frequenzkanals - von zum Beispiel 10 MHz - wirtschaftlich günstig zur Verfügung stehen. Auf diese Weise kann das komplizierter zu realisierende, in den Figuren 4 und 5 enthaltene, Frequenzbandfilter 33 entfallen. Dieses Vorgehen beinhaltet jedoch die Umsetzung der Signale am Ausgang des Signalverstärkers 22 im Frequenzmischer 31 mithilfe des Signals eines in der Frequenz spannungsgesteuerten Oszillators 30 (VCO). Mithilfe des im Mikroprozessor mit Speicher 20 abgelegten Algorithmus wird die Frequenz des Oszillators 30 in Suchschritten in der Weise verändert, dass die in der Frequenz umgesetzten Sendesignale in den Durchlassbereich des ZF-Frequenzkanal-Bandfilters 36 fallen und vom Detektor mit nachgeschaltetem Mikroprozessor mit Speicher 20 festgestellt sind, und somit die Detektion selbsttätig durch sequenzielle Abfrage auf den aktiven Frequenzkanal abgestimmt ist.

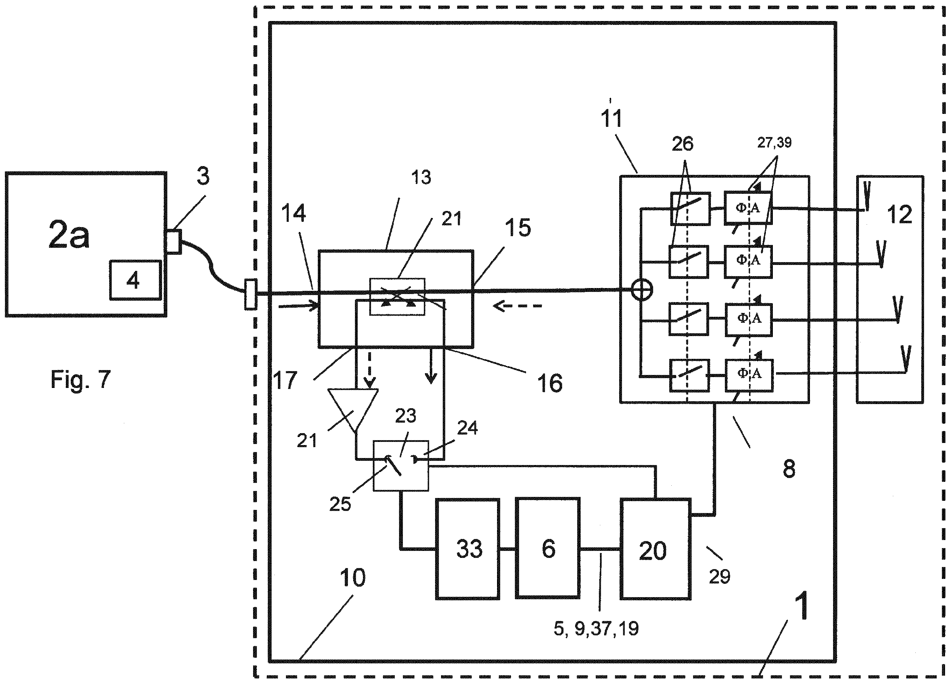

Fig. 7: Die Figur zeigt in einer weiteren vorteilhaften Ausgestaltung der Erfindung eine in der Frequenz breitbandig gestaltete Antennen-Diversity-Einrichtung 1 nach der Erfindung wie in Figur 5, jedoch mit dem Unterschied, dass die Sendesignale nunmehr am Sendesignal-Tor 16 des Mehrtor-Koppelelements 13 abgegriffen sind, die zusammen mit dem am Empfangssignale-Tor 17 abgegriffenen Empfangssignalen den beiden Anschlüssen eines steuerbaren Umschalters 23 zugeführt sind. Mithilfe des steuerbaren Umschalters 23 werden das Sendesignal und das Empfangssignal wahlweise, gesteuert durch den Mikroprozessor mit Speicher 20, dem Leistungspegel-Detektor 6 zugeführt. Diesem ist zum Schutz gegen Störungen außerhalb des Frequenzbandes ein Frequenzbandfilter 33 vorgeschaltet, dessen Durchlass-Frequenzbereich der Frequenzbandbreite (z. B. 70MHz) entspricht, welche alle Frequenzkanäle umfasst. Der im Mikroprozessor mit Speicher 20 abgelegte Algorithmus steuert den Umschalter 23, beginnend mit der Sendepegel-Schalterstellung 24, und liefert im Rahmen eines Prüfzyklus entsprechende Kombiner-Einstellsignale 29 an den Steueranschluss 8 des steuerbaren Antennen-Kombiners 11 zur Findung einer Kombiner-Einstellung, für welche ein besonders kleiner Sende-Leistungspegel 5 detektiert ist. In der Folge veranlasst der Algorithmus im Mikroprozessor mit Speicher 20 danach die Umschaltung des Umschalters 23 in die Empfangspegel-Schalterstellung 25 und sucht im Rahmen eines Prüfzyklus entsprechende Kombiner-Einstellsignale 29 zur Findung einer Kombiner-Einstellung, für welche ein besonders großer Empfangs-Leistungspegel 35 detektiert ist. Zur Verhinderung von Fehleinstellungen des steuerbaren Antennen-Kombiners 11 infolge der zu geringen Selektion von Sende-und Empfangssignalen an den Toren 17 und 16 ist insbesondere gegen das Auftreten von Sendesignalen am Empfangssignale-Tor 17 für den Richtkoppler 21 eine besonders hohe Richtdämpfung zu fordern.
   Aufgrund der in der Frequenz breitbandigen Anordnung kann die bidirektionale Kommunikation für Senden und Empfang auf ein und demselben Frequenzkanal alternierend in aufeinanderfolgenden Zeit-Schlitzen erfolgen und der steuerbare Antennen-Kombiner 11 während dieser Zeitschlitze jeweils entsprechend für minimale Sende-Leistungspegel 5 bzw. maximale Empfangs-Leistungspegel 35 eingestellt sein. Ebenso kann die bidirektionale Kommunikation auf unterschiedlichen, beliebigen Frequenzkanälen für Senden und Empfang in jeweils zugeordneten Zeit-Schlitzen erfolgen. Die Feststellung des Sende-bzw. Empfangsmodus kann auch hier im Mikroprozessor mit Speicher 20 erfindungsgemäß in jedem der beiden Fälle anhand des Auftretens des größeren Sende-Leistungspegels 5 im Vergleich zum kleineren Empfangs-Leistungspegels 35 erfolgen.
Fig. 8: Die Figur zeigt in einer weiteren vorteilhaften Ausgestaltung der Erfindung eine in der Frequenz breitbandig gestaltete Antennen-Diversity-Einrichtung 1 nach der Erfindung, wie in Figur 7, jedoch mit dem Unterschied, dass für die Detektion der Sendesignale der Leistungspegel-Detektor 6 und für die Detektion der Empfangssignale ein gesonderter Empfangs-Leistungspegel-Detektor 28 vorhanden sind. Hierzu sind die Sende-Empfangssignale an dem Sendesignal-Tor 16 bzw. dem Empfangssignal-Tor 17 nicht wie in Figur 7 dem Umschalter 23, sondern den entsprechenden Detektoren zur gleichzeitigen Detektion zugeführt. Zum Schutz gegen Stör-Empfangssignale außerhalb des Frequenzbandes ist dem Empfangs-Leistungspegel-Detektor 28 in diesem Beispiel das Frequenzbandfilter 33 vorgeschaltet, dessen Durchlassfrequenzbereich alle Frequenzkanäle umfasst. Die Erkennung dass Sendemodus und des Empfangsmodus im Mikroprozessor mit Speicher 20 ist über den Größenvergleich der Leistungspegel am Ausgang des Detektors 6 bzw. des Empfangs-Leistungspegel-Detektors 28 gegeben.
   Die gleichzeitig stattfindende Feststellung der Sende-Leistungspegel 5 und der Empfangs-Leistungspegel 35 ermöglichen Algorithmen, nach welchen über Prüfvorgänge eine für beide Kommunikationsrichtungen optimale Einstellung des steuerbaren Antennen-Kombiners 11 gefunden wird.

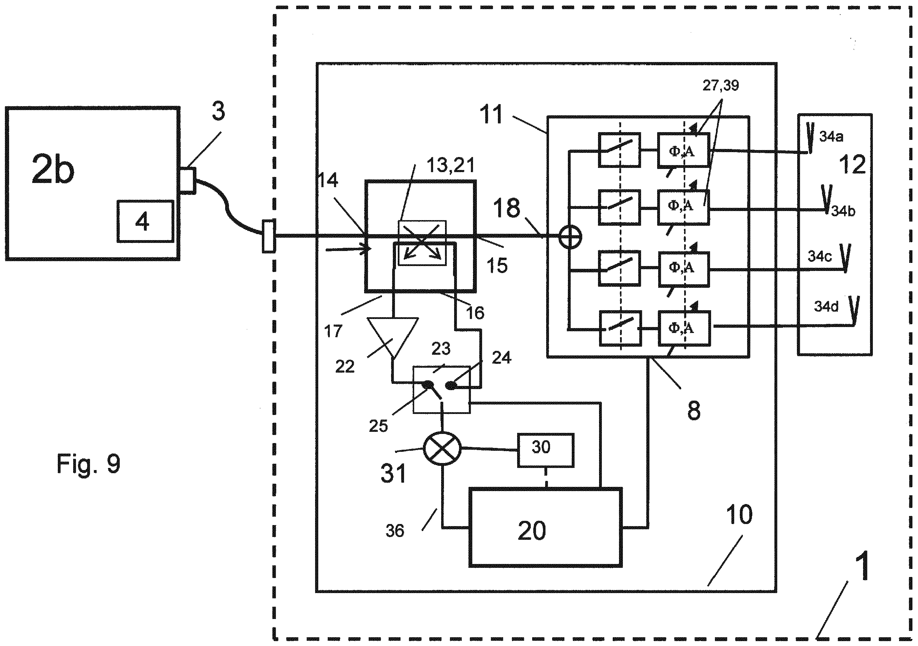

Fig. 9: Die Figur zeigt in einer weiteren vorteilhaften Ausgestaltung der Erfindung eine in der Frequenz breitbandig gestaltete Antennen-Diversity-Einrichtung 1 nach der Erfindung, wie in Figur 7, jedoch mit dem Unterschied, dass die Sende- bzw. Empfangssignale am Ausgang des Umschalters 23 durch Frequenzumsetzung im Frequenzmischer 31 in einer niedrigen Frequenzlage detektiert sind. Die Signale werden in dieser Frequenzlage nicht, wie in Figur 7, von einem gesonderten Detektor 6 detektiert, sondern direkt dem Mikroprozessor mit Speicher 20 zur rechnerischen Analyse und Detektion direkt zugeführt. Der Algorithmus im Mikroprozessor mit Speicher 20 steuert die Frequenz des spannungsgesteuerten Oszillators 30, dessen Ausgangssignal im Frequenzmischer 31 den Sende- bzw. Empfangssignalen überlagert ist, schrittweise im Rahmen eines Suchprozesses in der Weise, dass alle aktiven Sende-bzw. Empfangs-Frequenzkanäle und auch die darin befindlichen Signale dem Pegel nach erkannt und registriert sind.
Fig. 10: Die Figur zeigt in einer weiteren vorteilhaften Ausgestaltung der Erfindung eine Antennen-Diversity-Einrichtung 1 nach der Erfindung, wie in Figur 9, jedoch mit dem Unterschied, dass die Sende- bzw. Empfangssignale am Sendesignal-Tor 16 bzw. am Empfangssignal-Tor 17 gesondert jeweils durch Frequenzumsetzung im Frequenzmischer 31 bzw. im Frequenzmischer 31a in einer niedrigen Frequenzlage detektiert sind. Beide Signale sind in dieser Frequenzlage dem Mikroprozessor mit Speicher 20 zur gesonderten Analyse und Detektion zugeführt. Die Frequenzumsetzung der am Sendesignal-Tor 16 abgegriffenen Sendesignale erfolgt im Frequenzmischer 31 unter Überlagerung der Ausgangsspannung des vom Mikroprozessor mit Speicher 20 gesteuerten spannungsgesteuerten Oszillators 30, und die Frequenzumsetzung der am Empfangssignal-Tor 17 abgegriffenen Sendesignale erfolgt im Frequenzmischer 31a unter Überlagerung der Ausgangsspannung des ebenfalls vom Mikroprozessor mit Speicher 20 gesteuerten spannungsgesteuerten Oszillators 30a. Der Algorithmus im Mikroprozessor mit Speicher 20 steuert sowohl jeweils die Frequenz des spannungsgesteuerten Oszillators 30 bzw. des Oszillators 30a - deren Ausgangssignal jeweils im Frequenzmischer 31 den Sende- bzw. Empfangssignalen überlagert ist - schrittweise im Rahmen eines Suchprozesses in der Weise, dass alle aktiven Sende-bzw. Empfangs-Frequenzkanäle und auch die darin befindlichen Signale dem Pegel nach erkannt und registriert sind.
   Mit dieser Anordnung ist der Vorteil verbunden, dass bei Vorliegen einer Mehrkanal-Transceiver-Einrichtung 2b für mehrere gleichzeitig aktive Frequenzkanäle sowohl die Frequenzkanäle unter Sendemodus als auch die Frequenzkanäle unter Empfangsmodus gesondert erkannt sind und anhand der Gestaltung eines geeigneten Algorithmus zur Einstellung des steuerbaren Antennen-Kombiners 11 die bidirektionalen Kommunikationen über alle Frequenzkanäle gemittelt optimiert werden können.

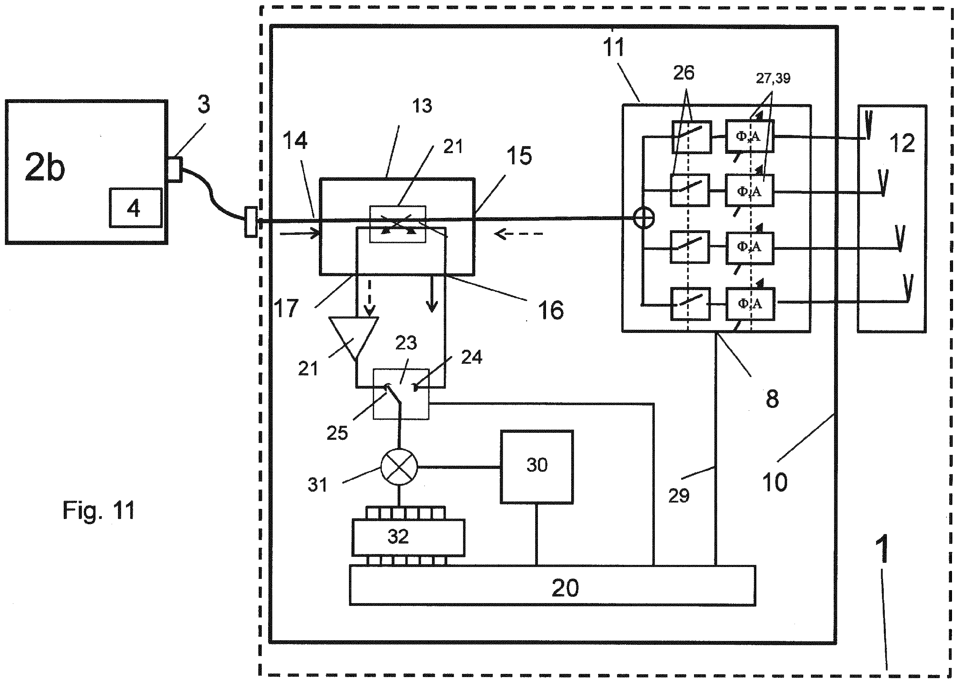

Fig. 11: Die Figur zeigt in einer weiteren vorteilhaften Ausgestaltung der Erfindung eine Antennen-Diversity-Einrichtung 1 nach der Erfindung, wie in Figur 9, jedoch mit dem Unterschied, dass die Signale in der niedrigen Frequenzlage dem Mikroprozessor mit Speicher 20 zur Analyse und Detektion nicht direkt zugeführt sind. Vielmehr sind die Signale nach dem Frequenzmischer 31 in einer Filterbank 32 gefiltert, in welcher den Frequenzkanälen innerhalb des Frequenzbandes entsprechend eine Reihe von Filtern mit jeweils der Frequenzbandbreite eines Frequenzkanals in der niedrigen Frequenzlage zugeordnet ist. Durch geeignete Einstellung der Oszillatorfrequenz des spannungsgesteuerten Oszillators 30 durch den Mikroprozessor mit Speicher 20 stehen in der Sendepegel-Schalterstellung 24 des Umschalters 23 die Sendeinhalte aller Frequenzkanäle in der niedrigen Frequenzlage am Filter an und werden an dessen Ausgang für alle Frequenzkanäle gesondert zugeordnet dem Mikroprozessor mit Speicher 20 gleichzeitig zugeleitet. Die Filterung der Sendesignale in den unterschiedlichen, in der Frequenz vorbekannten Frequenzkanälen in der niedrigen Frequenzlage entlastet den Mikroprozessor mit Speicher 20 bei der rechnerischen Analyse und Detektion der Sendesignale wesentlich. Durch Umschalten des Umschalters 23 in die Empfangspegel-Schalterstellung 25 durch den Mikroprozessor mit Speicher 20 erfolgt die Detektion der Empfangssignale auf ähnliche Weise. Somit ist die Antennen-Diversity-Einrichtung 1 geeignet, die gesamte bidirektionale Kommunikation auf mehreren Frequenzkanälen anhand der Pegel-Detektionen auf schnelle Arbeitsweise zu unterstützen.
Fig. 12: Die Figur zeigt in einer weiteren vorteilhaften Ausgestaltung der Erfindung eine Antennen-Diversity-Einrichtung 1 nach der Erfindung, wie in Figur 9, jedoch mit dem Unterschied, dass die niedrigere Frequenzlage als Zwischenfrequenz gewählt ist, sodass zugehörige ZF-Frequenzkanal-Bandfilter 36 wirtschaftlich günstig verfügbar sind und eingesetzt werden können. Ein solches Bandfilter 36 ist dem Frequenzmischer 31 nachgeschaltet. Die Oszillatorfrequenz des spannungsgesteuerten Oszillators 30 ist vom Mikroprozessor mit Speicher 20 in der Weise eingestellt, dass die in der Frequenz umgesetzten Sende-und Empfangssignale in den Durchlassbereich des ZF-Frequenzkanal-Bandfilters 36 fallen. Das Ausgangssignal des ZF-Frequenzkanal-Bandfilters 36 ist im Leistungspegel-Detektor 6 detektiert und der Sende-Leistungspegel 5 und der Empfangs-Leistungspegel 35 sind über den Umschalter 23, gesteuert durch den Mikroprozessor mit Speicher 20, diesem alternierend zugeführt. Die Abstimmung der Antennen-Diversity-Einrichtung 1 zur Abfrage der Signalinhalte der einzelnen Frequenzkanäle erfolgt, gesteuert durch den Algorithmus im Mikroprozessor mit Speicher 20 durch sequenzielle Steuerung des spannungsgesteuerten Oszillators 30. Im Gegensatz zur Antennen-Diversity-Einrichtung 1 in Figur 9 ist der Mikroprozessor mit Speicher 20 davon entlastet, das ihm zugeführte Signal in der niedrigeren Frequenzlage rechnerisch zu analysieren und zu detektieren. Dies führt zu einer wesentlichen Verkürzung der Rechen-und somit Einstellzeit des steuerbaren Antennen-Kombiners 11.

Das vorteilhafte Wirken einer Antennen-Diversity-Einrichtung 1 nach der Erfindung kann ähnlich der bereits beschriebenen erfindungsgemäßen Anordnung von z.B. vier Monopolantennen auf der Unterseite eines Fahrzeugdaches - also im Innenraum des Fahrzeugs - erläutert werden. Die bereits oben beschriebene Anordnung der Monopolantennen in einer Kreisgruppe um einen Mittelpunkt unter der zumindest im Umkreis über einige Wellenlängen λ elektrisch leitenden Dachhaut des Fahrzeugs führt bereits mit einem aufwandsarmen, lediglich aus Schaltern 26 gebildeten steuerbaren Antennen-Kombiners 11 zu den genannten Vorteilen. Die Länge jeder Monopolantenne kann etwa ¼ λ betragen und ermöglicht mit ca. 12 mm bei einer Frequenz von ca. 6 GHz die Unterbringung unter der Dachbespannung (Dachhimmel) des Fahrzeugs.

Die Wirkungsweise der Antennen-Diversity-Einrichtung 1 kann, wie folgt, erläutert werden. Das azimutale Richtdiagramm jeder einzeln angeschalteten Monopolantenne - gemessen in einem reflexionsfreien Radom auf einem Fahrzeugdrehstand - ist zwar aufgrund der nahezu mittigen Position im Fahrzeug auf gewisse Weise eine Rundumwirkung, fächert jedoch im gesamten Azimut in eine Vielzahl von Strahlungskeulen mit jeweils einem Strahlungsmaximum auf, wodurch sich zwischen azimutal benachbarten Strahlungsmaxima tiefe Strahlungseinbrüche von zum Teil bis zu 20 dB gegenüber dem benachbarten Strahlungsmaximum einstellen. Der mittlere azimutale Winkelabstand zwischen den benachbarten Strahlungseinbrüchen beträgt bei dieser Frequenz im Mittel wenige Winkelgrade. Diese Strahlungseinbrüche ergeben sich durch die aufgrund der destruktiven Überlagerung der am Fahrzeug reflektierten und gebeugten Wellen 38, wie in Figur 2. Hierzu zählen insbesondere die Fensteröffnungen mit ihren reflektierenden Fenstersäulen Die Auffächerung ergibt sich je nach Ausgestaltung des Fahrzeugs im Bereich der Fenstersäulen sowie auch aus der Krümmung des Fahrzeugdachs etc.

Für eine gleichartig gestaltete Monopolantenne, welche um eine Weglänge von etwa 0,2λ bis 0,75λ horizontal versetzt unter dem Fahrzeugdach angebracht ist, gilt ein ähnliches Strahlungsdiagramm. Deren Strahlungseinbrüche sind jedoch im Azimut gegenüber der Monopolantenne in der vorhergehenden Position in der Regel verschoben. Damit ist es anhand einer Antennen-Diversity-Einrichtung 1 mit mehreren Monopolantennen erfindungsgemäß möglich, bei Auftreten eines Strahlungseinbruchs bei einer der Monopolantennen diesen Strahlungseinbruch durch Umschalten auf eine andere, im geeigneten Abstand befindliche Antenne mit deren Strahlungskeule abzudecken. Eine Mehrantennenanlage 12 für eine besonders aufwandsarme Antennen-Diversity-Einrichtung 1 nach der Erfindung besteht - wie oben beschrieben - aus 4 Monopolantennen. Bei gesonderter Messung der azimutalen Richtdiagramme der 4 Monopolantennen und Bildung des Richtdiagramms aus dem jeweils größten azimutalen Messwert aus den 4 Monopolantennen ergibt sich ein Quasi-Runddiagramm mit unwesentlichen Strahlungseinbrüchen. Dieses Rund -Strahlungsdiagramm steht durch Anwahl der jeweils am besten geeigneten Antenne für die Diversity-Einrichtung zur Verfügung. Die verbleibende Welligkeit des durch Überlagerung der einzelnen Richtdiagramme der Monopole anhand der Messungen auf dem Fahrzeug-Drehstand des Rund-Strahlungsdiagramms kann erfindungsgemäß auch durch justierende, geringfügige Abweichung von der regulären Anordnung der Monopole in der Kreisgruppe weiter verringert werden. Der Suchprozess für eine günstige Einstellung der Antennen-Diversity-Einrichtung 1 nach der Erfindung während der bidirektionalen Kommunikation ist durch diese Maßnahmen begünstigt und führt - auch unter zusätzlicher Beeinflussung durch Umweg-Wellen 37 aus der Fahrzeugumgebung (sh.Fig.2) - im Mittel zu vorteilhaft kurzen Einstellzeiten.

In einer vorteilhaften Weiterführung der Erfindung besteht die Mehrantennenanlage 12 also aus einer Anzahl von N > 2 vertikal polarisierten Monopolantennen 34a, 34b,.. welche auf der Unterseite des Daches im Fahrgastinnenraum um einen zentralen Punkt als Kreisgruppe mit einem Kreisdurchmesser etwa zwischen 0,2λ bis 0,75λ derart angeordnet sind, dass durch sie im Wesentlichen ein reguläres N- Eck gebildet ist. Die Monopolantennen sind gegenüber dem elektrisch leitenden Fahrzeugdach erregt. Somit dient das elektrisch leitende, im Wesentlichen horizontal orientierte Fahrzeugdach als elektrisches Gegengewicht der Monopolantennen 34a, 34b,....Elektrisch niedrige Monopolantennen sind in diesem Zusammenhang in ihrer Form keinesfalls auf die Stabform beschränkt, sondern können aus weitgehend davon abweichende Strukturen bestehen, welche monopolartig gegenüber dem metallischen Dach erregt sind.

Die Diversifizierung der Antennen-Diversity-Einrichtung 1 kann erhöht und somit kann auch die verbleibende Welligkeit der überlagert dargestellten Strahlungsdiagramme der einzelnen Monopolantennen weiter verringert werden, wenn die Anzahl der Monopole in der Kreisgruppe oder darüber hinaus mehrere Kreisgruppen von Monopolantennen 34a, 34b,.. konzentrisch angeordnet sind und wenn weiterhin im steuerbaren Antennen-Kombiner 11 steuerbare Phasendrehglieder 27 (sh. Fig. 5) ggfs. mit steuerbaren Amplitudengliedern 39 (sh. Fig. 6) vorhanden sind.

Bei Vorhandensein einer Transceiver-Einrichtung 1 mit zwei Hochfrequenzanschlüssen 3, 3a, für welche jeweils eine Antenne für eine Diversitywirkung vorgesehen ist, kann jeweils eine Antennen-Diversity-Einrichtung 1 nach der Erfindung angeschlossen sein. Hierbei ist vorausgesetzt, dass für jeden der beiden Hochfrequenz Anschlüsse 3 gilt, dass während der bidirektionalen Kommunikation über den betreffenden Hochfrequenzanschluss der Sendeleistungspegel (5 mit absinkender Qualität der Kommunikationsverbindung größer eingestellt und umgekehrt mit steigender Übertragungsqualität der Kommunikationsverbindung abgesenkt ist.

Jede der beiden Antennen-Diversity-Einrichtungen 1 sucht während der Kommunikationsverbindung über den betreffenden Hochfrequenzanschluss 3,3a erfindungsgemäß selbsttätig eine Einstellung des steuerbaren Antennen-Kombiners 11 zur Verbesserung der Qualität der Kommunikation. Dies ermöglicht zum Beispiel die Anordnung von zwei dazugehörigen Mehrantennenanlagen 12 als Kreisgruppen von Monopolantennen 34a, 34b,.. an unterschiedlichen Stellen unter dem Fahrzeugdach, zum Beispiel im vorderen und im hinteren Bereich.

Die erfindungsgemäße Verbesserung der bidirektionalen Kommunikation kann in besonderen Fällen jedoch auch erreicht werden, wenn in der Fahrzeug-Transceiver-Einrichtung 2 eine Sende-Leistungspegel-Regeleinrichtung nicht besteht und die bidirektionale Kommunikation auf einem Sende-Empfangskanal vorgesehen ist, d. h. Senden und Empfang auf demselben Frequenzkanal erfolgen, also eine Einkanal-Transceiver-Vorrichtung 2b gegeben ist. Eine hierfür geeignete Anordnung ist im Zusammenhang mit der Figur 6 beschrieben. Die bidirektionale Kommunikation auf dem Sende-Empfangskanal wird, wie oben beschrieben, in aufeinanderfolgenden Sende-und Empfangs-Zeitschlitzen abgewickelt. Im Mikroprozessor mit Speicher 20 wird während eines Sende-Zeitschlitzes der Sende-Empfangskanal anhand der schrittweisen Suche nach der geeigneten Oszillatorfrequenz des spannungsgesteuerten Oszillators 30 festgestellt. Mit der zugehörigen Einstellung der Oszillatorfrequenz wird während eines Empfangs-Zeitschlitzes der Empfangs-Leistungspegel 35 erfasst. Während der Empfangs-Zeitschlitze der bidirektionalen Kommunikation wird in der Antennen-Diversity-Einrichtung 1 im Rahmen eines Prüfvorgangs in aufeinanderfolgenden Prüfschritten jeweils in der Weise eine andere Einstellung der Antennen-Diversity-Einrichtung 1 gewählt, dass der bei jeder Prüfeinstellung auftretende Empfangs-Leistungspegel 35 als Prüf-Empfangsleistungspegel 19 jeweils detektiert und gespeichert ist. Anhand des Vergleichs der Prüf- Empfangs-Leistungspegel 35 untereinander ist am Ende des Prüfvorgangs eine Einstellung der Strahlungs-Richtwirkung der Antennen-Diversity-Einrichtung gewählt, mit welcher ein größerer Empfangs-Leistungspegel 35 detektiert ist wodurch die Qualität der bidirektionalen Kommunikation verbessert ist.

### Liste der Bezeichnungen

Antennen-Diversity-Einrichtung 1
Transceiver-Einrichtung 2
Einkanal- Transceiver-Einrichtung 2a
Mehrkanal-Transceiver-Einrichtung 2b
Hochfrequenzanschluss 3
Leistungspegel-Regeleinrichtung 4
Sende-Leistungspegel 5
Leistungspegel-Detektor 6
Direkt einfallende Welle 7
Steueranschluss 8
Prüf-Sendeleistungspegel 9
Diversity-Steuereinrichtung 10
steuerbarer Antennen-Kombiner 11
Mehrantennenanlage 12
Mehrtor-Koppelelement 13
erstes Tor 14
zweites Tor 15
Sendesignal-Tor 16
Empfangssignal-Tor 17
Kombiner-Signalanschluss 18
Prüf-Empfangsleistungspegel 19
Mikroprozessor mit Speicher 20
Richtkoppler 21
Signalverstärker 22
Steuerbarer Umschalter 23
Sendepegel-Schalterstellung 24
Empfangspegel-Schalterstellung 25
Steuerbarer Antennenumschalter 26
Steuerbares Phasendrehglied 27
Empfangsleistungspegel-Detektor 28
Kombiner-Einstellsignale 29
Spannungsgesteuerter Oszillator 30
Frequenzmischer 31
Zwischenfrequenz-Filterbank 32
Frequenzbandfilter 33
Antennenstrukturen 34a, 34b, 34c,...
Empfangs-Leistungspegel 35
ZF-Frequenzkanal-Bandfilter 36
Umweg-Welle 37
Am Fahrzeug reflektierte und gebeugte Wellen 38
steuerbare Amplituden-Einstellglieder 39

## Patentansprüche

1. Antennen-Einrichtung für ein Fahrzeug
für eine Fahrzeug-Transceiver-Einrichtung (2), deren Sendeleistungspegel-Regeleinrichtung in der Weise gestaltet ist, dass während der bidirektionalen Kommunikation der Sendeleistungspegel (5) mit absinkender Qualität der Kommunikationsverbindung größer eingestellt und umgekehrt mit steigender Übertragungsqualität der Kommunikationsverbindung abgesenkt ist, umfassend die folgenden Merkmale :
- die Antennen-Einrichtung ist als Antennen-Diversity-Einrichtung (1) mit mehreren Antennenelementen (34a, 34b,..) in der Weise gestaltet, dass mehrere Diversity-Einstellungen zur Auswahl unterschiedlicher Strahlungs-Richtwirkungen für Senden und für Empfang anwählbar sind
- die Antennen-Diversity-Einrichtung (1) ist mit dem Hochfrequenzanschluss (3) der Fahrzeug-Transceiver-Einrichtung (2) verbindbar
- in der Antennen-Diversity-Einrichtung (1) ist ein Leistungspegel-Detektor (6) vorhanden, welcher dazu eingerichtet ist, den Sendeleistungspegel (5) der Fahrzeug-Transceiver-Einrichtung (2) zu detektieren und laufend zu registrieren
- zur Anhebung der Übertragungsqualität der Kommunikationsverbindung ist nach alternierend durchgeführter Wahl einer jeweils anderen Einstellung der Antennen-Diversity-Einrichtung (1) und Detektion des bei dieser Einstellung bestehenden Sendeleistungspegels eine Einstellung der Antennen-Diversity-Einrichtung (1) gewählt, bei der ein kleinerer Sendeleistungspegel erreicht ist.

2. Antennen-Diversity-Einrichtung (1) nach Anspruch 1, wobei
während der bidirektionalen Kommunikation in der Antennen-Diversity-Einrichtung (1) im Rahmen eines Prüfvorgangs in aufeinanderfolgenden Prüfschritten jeweils in der Weise eine andere Einstellung der Antennen-Diversity-Einrichtung (1) gewählt ist, dass der bei jeder Prüfeinstellung auftretende Sendeleistungspegel (5) als Prüf-Sendeleistungspegel (9) der Fahrzeug-Transceiver-Einrichtung (1) jeweils detektiert und gespeichert ist und anhand des Vergleichs der Prüf-Sendeleistungspegel (9) untereinander am Ende des Prüfvorgangs eine Einstellung der Antennen-Diversity-Einrichtung (1) gewählt ist, mit welcher ein kleinerer Sendeleistungspegel (5) detektiert ist.

3. Antennen-Diversity-Einrichtung (1) nach Anspruch 1 oder 2, wobei in der Antennen-Diversity-Einrichtung (1) folgende Baueinheiten enthalten sind:
- eine Mehrantennenanlage (12) bestehend aus einer Vielzahl von Antennenelementen (34a, 34b, 34c,.....),
- eine Diversity-Steuereinrichtung (10) mit nachfolgenden Baueinheiten:
- mindestens ein steuerbarer Antennen-Kombiner (11) mit einem Kombiner-Signalanschluss (18) und mit einem Steueranschluss (8) zur gesteuerten Einstellung unterschiedlicher Strahlungs-Richtwirkungen der Mehrantennenanlage (12), an welche die Antennenelementen (34a, 34b, 34c,...) der Mehrantennenanlage (12) angeschlossen sind,
- ein verlustarmes Mehrtor-Koppelelement (13), dessen erstes Tor (14) mit dem Hochfrequenzanschluss (3) der Fahrzeug-Transceiver -Einrichtung (2) verbindbar und dessen zweites Tor (15) mit dem Kombiner- Signalanschluss (18) verbunden ist, wobei zwischen dem ersten Tor (14) und dem zweiten Tor (15) eine starke Kopplung besteht und mindestens einem weiteren, mit Sendesignal-Tor (16) bezeichnetem Tor mit schwacher Ankopplung an das erste Tor (14),
- mindestens ein Mikroprozessor mit Speicher (20), welcher eingangsseitig mit dem Ausgang des Leistungspegel-Detektors (6) und ausgangsseitig mit dem Steuereingang (8) des steuerbaren Antennen-Kombiners (11) verbunden ist, wobei
- im Mikroprozessor mit Speicher (20) ein Algorithmus zur Ansteuerung des steuerbaren Antennen-Kombiners (11) abgelegt ist, durch welchen nach Ablauf eines Prüfvorgangs jeweils ein kleinerer Sendeleistungspegel (5) vom Leistungspegel-Detektor (6) angezeigt ist, und wobei
- der Leistungspegel-Detektor (6) eingangsseitig mit dem Sendesignal-Tor (16) verbunden ist.

4. Antennen-Diversity-Einrichtung (1) nach Anspruch 3, wobei die Fahrzeug-Transceiver-Einrichtung (2, 2a) für Senden und Empfang auf demselben Frequenzkanal gestaltet ist und der im Mikroprozessor mit Speicher (20) abgelegte Algorithmus zur Ansteuerung der Antennen-Diversity-Einrichtung (1) in der Weise gestaltet ist, dass bei Überschreitung eines vorgegebenen Sende-Empfang-Pegelschwellwerts am Ausgang des Leistungspegel-Detektors (6) ein Sende-Zeitschlitz erkannt ist, während dessen die Einstellung der Antennen-Diversity-Einrichtung (1) für einen kleineren Sendeleistungspegel (5) durch den Mikroprozessor mit Speicher (20) gegeben ist.

5. Antennen-Diversity-Einrichtung (1) nach einem der vorstehenden Ansprüche, wobei zur gerichteten Signalankopplung des Leistungspegel-Detektors (6) für die Feststellung des Sende-Leistungspegels (5) ein Richtkoppler (21) mit geringfügiger Einfügungsdämpfung zwischen seinem ersten Tor (14) und seinem zweiten Tor (15) vorhanden ist und der Richtkoppler (21) mit seinem ersten Tor (14) und seinem zweiten Tor (15) zwischen dem Hochfrequenzanschluss (3) und dem Kombiner-Signalanschluss (18) geschaltet ist, dass zwischen dem ersten Tor (14) und dem zweiten Tor (15) die kleine Einfügungsdämpfung des Richtkopplers (21) besteht und am Sendesignal-Tor (16) der um den Kopplungsfaktor des Richtkopplers (21) reduzierte Sendeleistungspegel (5) mit dem Leistungspegel-Detektor (6) detektiert ist.

6. Antennen-Diversity-Einrichtung (1) nach Anspruch 5, wobei
am Richtkoppler (21) ein weiteres, mit Empfangssignale-Tor (17) bezeichnetes Tor für den gerichteten Empfang der um den Kopplungsfaktor verminderten Empfangssignale der Antennen-Diversity-Einrichtung (1) und der um den Richtfaktor des Richtkopplers (21) weiter abgeschwächten Sendesignale vorhanden ist.

7. Antennen-Diversity-Einrichtung (1) nach Anspruch 6 in Verbindung mit Anspruch 3, wobei sowohl die Sendesignale als auch die Empfangssignale am Empfangssignale-Tor (17) dem Leistungspegel-Detektor (6) zugeführt sind und für die bidirektionale zeitsequenzielle Sende-Empfangs-Kommunikation auf demselben Frequenzkanal im Mikroprozessor mit Speicher (20) ein Sende-Empfangs-Pegelschwellwert eingerichtet ist und der Algorithmus zur Ansteuerung der Antennen-Diversity-Einrichtung (1) in der Weise gestaltet ist, dass bei Unterschreitung des vorgegebenen Sende-Empfangs-Pegelschwellwerts am Ausgang des Leistungspegel-Detektors (6) ein Empfangs-Zeitschlitz erkannt ist, während dessen durch den Mikroprozessor mit Speicher (20) im Rahmen eines Prüfvorgangs in aufeinanderfolgenden Prüfschritten jeweils eine andere Einstellung der Antennen-Diversity-Einrichtung (1) angewählt ist, und der bei jeder Prüfeinstellung der Antennen-Diversity-Einrichtung (1) auftretende Empfangsleistungspegel (39) als Prüf-Empfangsleistungspegel (19) der Fahrzeug-Transceiver-Einrichtung (1) jeweils detektiert und registriert ist, und anhand des Vergleichs der Prüf-Empfangsleistungspegel (19) untereinander am Ende des Prüfvorgangs eine Einstellung der Antennen-Diversity-Einrichtung (1) gewählt ist, mit welcher ein größerer Empfangsleistungspegel (37) erreicht ist, und bei Überschreitung des vorgegebenen Sende-Empfangs-Pegelschwellwerts nach Anspruch 3 ein kleinerer Sendeleistungspegel (5) erreicht ist.

8. Antennen-Diversity-Einrichtung (1) nach Anspruch 7, wobei
zur eigenständigen Frequenzabstimmung der Sende-Pegeldetektion auf einen aktiven bidirektionalen Frequenzkanal im Frequenzband ein vom Mikroprozessor mit Speicher (20) gesteuerter Oszillator (30) vorhanden ist, dessen Oszillatorsignal und die Sende-bzw. Empfangssignale einem Frequenzmischer (31) zur Frequenzumsetzung in Zwischenfrequenzsignale in eine niedrigere Zwischenfrequenz-Ebene zugeführt sind und die Leistungspegel der im ZF-Leistungspegel-Detektor (6) mit ZF-Frequenzkanal-Bandfilter (36) detektierten Zwischenfrequenz-Signale dem Mikroprozessor mit Speicher (20) zugeführt sind, durch dessen Frequenzsteuerung des Oszillators (30) der Signalinhalt der einzelnen Frequenzkanäle sequenziell ermittelt und daraufhin die Sende-und Empfangspegeldetektion auf den aktiven Frequenzkanal abgestimmt ist.

9. Antennen-Diversity-Einrichtung (1) nach einem der Ansprüche 3 bis 8,
wobei zur getrennten Detektion der an dem Sendesignal-Tor (16) in einem Frequenzkanal innerhalb des Frequenzbandes vorwiegend anliegenden Sendesignale und dem an dem Empfangssignal-Tor (17) in einem Frequenzkanal innerhalb des Frequenzbandes vorwiegend anliegenden Empfangssignale ein vom Mikroprozessor mit Speicher (20) elektronisch gesteuerter Umschalter (23) zur wechselweisen zeitsequenziellen Weiterleitung der Sende- bzw. Empfangs-Signale an den Leistungspegel-Detektor (6), welchem ein Frequenzbandfilter (33) zur Unterdrückung von Außerband-Signalen vorgeschaltet ist.

10. Antennen-Diversity-Einrichtung (1) nach Anspruch 9, wobei jedoch die Fahrzeug-Transceiver-Einrichtung (2, 2b) für Senden und Empfang auf unterschiedlichen Frequenzkanälen eingerichtet ist, und zur Erkennung der Sende-Kanalfrequenz und der Empfangs-Kanalfrequenz im Mikroprozessor mit Speicher (20) ein Frequenz-Suchalgorithmus abgelegt ist zur Steuerung eines spannungsgesteuerten Oszillators (30), dessen Oszillatorsignal mit den Sende-bzw. Empfangssignalen im Frequenzmischer (31) in ZF-Ausgangssignale mit niedrigerer Frequenz umgesetzt sind, welche dem Mikroprozessor mit Speicher (20) zugeführt und dort rechnerisch analysiert sind - und somit auch die Sende-Kanalfrequenz und die Empfangs-Kanalfrequenz im Mikroprozessor mit Speicher (20) abgelegt sind.

11. Antennen-Diversity-Einrichtung (1) nach Anspruch 10, wobei zur weiteren Entlastung der Rechenleistung des Mikroprozessors mit Speicher (20) eine Zwischenfrequenz-Filterbank (32) mit ZF-Frequenzkanal-Bandfiltern entsprechend den einzelnen Frequenzkanälen des Frequenzbandes vorhanden ist, welche dem ZF-Ausgang des Frequenzmischers (31) nachgeschaltet ist, und dessen Filter-Ausgangssignale dem Mikroprozessor mit Speicher (20) zugeführt sind, und der im Mikroprozessor mit Speicher (20) abgelegte Frequenz-Suchalgorithmus in der Weise gestaltet ist, dass über die schrittweise Steuerung der Frequenz des spannungsgesteuerten Oszillators (30) die aktiven Kanäle durch rechnerische Feststellung der Signalpegel bei den einzelnen Kanalfrequenzen der Sendepegel in Schalterstellung (24) bzw. der Empfangspegel in Schalterstellung (25) im Mikroprozessor mit Speicher (20) ermittelt und dort abgelegt sind.

12. Antennen-Diversity-Einrichtung (1) nach einem der vorstehenden Ansprüche, wobei ein in einem Mikroprozessor mit Speicher (20) abgelegter Algorithmus zur Ansteuerung der Antennen-Diversity-Einrichtung (1) in der Weise gestaltet ist, dass in einer Taktfolge jeweils alternierend über Prüfzyklen die Einstellung der Antennen-Diversity-Einrichtung (1) für einen kleineren Sende-Leistungspegel (5) bei der Sende-Kanalfrequenz und die Einstellung der Antennen-Diversity-Einrichtung (1) für einen größeren Leistungspegel (35) bei der Empfangs-Kanalfrequenz gegeben ist.

13. Antennen-Diversity-Einrichtung (1) nach Anspruch 3, wobei der steuerbare Antennen-Kombiner (11) steuerbare Antennenumschalter (26) enthält, welche einerseits jeweils mit dem Kombiner-Signalanschluss (18) und andererseits mit jeweils mindestens einem von zwei Antennenelementen (34a, 34b, 34c...) verbunden ist, deren zugehörige Schalterstellungen kombiniert über die Kombiner-Einstellsignale (29) des Mikroprozessors mit Speicher (20) am Steueranschluss (8) eingestellt sind und über unterschiedliche Schalterstellungen unterschiedliche Strahlungs-Richtwirkungen eingestellt sind.

14. Antennen-Diversity-Einrichtung (1) nach Anspruch 3, wobei im steuerbaren Antennen-Kombiner (11) einstellbare Phasendrehglieder (27) vorhanden sind, sodass die Antennenelemente (34a, 34b, 34c...) über die einstellbaren Antennenumschalter (26) und die einstellbaren Phasendrehglieder (27) am Kombiner-Signalanschluss (18) unterschiedlich einstellbar kombiniert sind und über unterschiedliche Schalterstellungen und unterschiedliche Einstellungen der einstellbaren Phasendrehglieder (27) über die Kombiner-Einstellsignale (29) des Mikroprozessors mit Speicher (20) am Steueranschluss (8) unterschiedliche Strahlungs-Richtwirkungen eingestellt sind.

## Claims

1. An antenna device for a vehicle
for a vehicle transceiver device (2) whose transmission power level regulation device is configured in a manner such that, during the bidirectional communication, the transmission power level (5) is set greater as the quality of the communication link falls and is conversely lowered as the transmission quality of the communication link increases,
comprising the following features:
- the antenna device is configured as an antenna diversity device (1) having a plurality of antenna elements (34a, 34b, ...) in a manner such that a plurality of diversity settings can be selected for a selection of different radiation directivities for transmission and for reception;
- the antenna diversity device (1) is connectable to the radio frequency terminal (3) of the vehicle transceiver device (2);
- a power level detector (6) is present in the antenna diversity device (1) and is configured to detect the transmission power level (5) of the vehicle transceiver device (2) and to constantly register it; and,
- to increase the transmission quality of the communication link, a setting of the antenna diversity device (1) at which a smaller transmission power level is reached is selected after an alternatingly carried out selection of a respective different setting of the antenna diversity device (1) and a detection of the transmission power level present at this setting.

2. An antenna diversity device (1) in accordance with claim 1, wherein, during the bidirectional communication in the antenna diversity device (1), a different setting of the antenna diversity device (1) is selected as part of a test procedure in consecutive test steps in a respective manner such that the transmission power level (5) occurring at each test setting is respectively detected and stored as a test transmission power level (9) of the vehicle transceiver device (1) and a setting of the antenna diversity device (1) at which a smaller transmission power level (5) is detected is selected with reference to the comparison of the test transmission power levels (9) with one another at the end of the test procedure.

3. An antenna diversity device (1) in accordance with claim 1 or claim 2, wherein the following assemblies are included in the antenna diversity device (1):
- a multi-antenna system (12) comprising a plurality of antenna elements (34a, 34b, 34c, ...);
- a diversity control device (10) having the following assemblies:
- at least one controllable antenna combiner (11) having a combiner signal connector (18) and having a control connector (8) for a controlled setting of different radiation directivities of the multi-antenna system (12) to which the antenna elements (34a, 34b, 34c, ...) of the multi-antenna system (12) are connected;
- a low-loss multiport coupling element (13) whose first port (14) is connectable to the radio frequency terminal (3) of the vehicle transceiver device (2) and whose second port (15) is connected to the combiner signal connector (18), with a strong coupling being present between the first port (14) and the second port (15) and at least one further port, designated as the transmission signal port (16), with a weak coupling to the first port (14); and
- at least one microprocessor with memory (20) which is connected at the input side to the output of the power level detector (6) and at the output side to the control input (8) of the controllable antenna combiner (11), wherein
- an algorithm for controlling the controllable antenna combiner (11) is stored in the microprocessor with memory (20), by which algorithm a respective smaller transmission power level (5) is displayed by the power level (6) after the end of a test procedure, and wherein
- the power level detector (6) is connected at the input side to the transmission signal port (16).

4. An antenna diversity device (1) in accordance with claim 3, wherein the vehicle transceiver device (2, 2a) is configured for transmission and reception on the same frequency channel and the algorithm stored in the microprocessor with memory (20) for controlling the antenna diversity device (1) is designed in a manner such that on an exceeding of a predefined transmission and reception level threshold, a transmission time slot is recognized at the output of the power level detector (6) during which the setting of the antenna diversity device (1) is given for a smaller transmission power level (5) by the microprocessor with memory (20).

5. An antenna diversity device (1) in accordance with any one of the preceding claims, wherein a directional coupler (21) having a small insertion loss between its first port (14) and its second port (15) is present for a directed signal coupling of the power level detector (6) for the determination of the transmission power level (5) and the first port (14) and the second port (15) of the directional coupler (21) are connected between the radio frequency connector (3) and the combiner signal connector (18) such that the small insertion loss of the directional coupler (21) is present between the first port (14) and the second port (15) and the transmission power level (5) reduced by the coupling factor of the directional coupler (21) is detected at the transmission signal port (16) by the power level detector (6).

6. An antenna diversity device (1) in accordance with claim 5, wherein
a further port designated as a reception signal port (17) is present at the directional coupler (21) for the directed reception of the reception signals of the antenna diversity device (1) reduced by the coupling factor and of the transmission signals further attenuated by the directional factor of the directional coupler (21).

7. An antenna diversity device (1) in accordance with claim 6 in conjunction with claim 3, wherein both the transmission signals and the reception signals at the reception signal port (17) are supplied to the power level detector (6) and a transmission and reception level threshold is established in the microprocessor with memory (20) for the bidirectional time-sequential transmission and reception communication on the same frequency channel and the algorithm for controlling the antenna diversity device (1) is designed in a manner such that on a falling below of the predefined transmission and reception level threshold at the output of the power level detector (6), a reception time slot is recognized during which a respective different setting of the antenna diversity device (1) is selected by the microprocessor with memory (20) as part of a test procedure in consecutive test steps and the reception power level (19) occurring on each test setting of the antenna diversity device (1) is respectively detected and registered as the test reception power level (19) of the vehicle transceiver device (1) and a setting of the antenna diversity device (1) is selected at the end of the test procedure with reference to the comparison of the test reception power levels (19) with one another, at which setting a greater reception power level (5) is reached and on an exceeding of the predefined transmission and reception level threshold, a smaller transmission power level (5) is reached in accordance with claim 3.

8. An antenna diversity device (1) in accordance with claim 7, wherein,
for the independent frequency matching of the transmission level detection to an active bidirectional frequency channel in the frequency band, an oscillator (30) is present which is controlled by the microprocessor with memory (20) and whose oscillator signal and the transmission or reception signals are supplied to a frequency mixer (31) for frequency conversion into intermediate frequency signals in a lower intermediate frequency domain and the power levels of the intermediate frequency signals detected in the IF power level detector (6) having the IF frequency band filter (36) are supplied to the microprocessor with memory (20) by whose frequency control of the oscillator (30) the signal content of the individual frequency channels is determined sequentially and the transmission and reception level detection is thereupon coordinated with the active frequency channel.

9. An antenna diversity device (1) in accordance with any one of the claims 3 to 8, wherein a selector switch (23) electronically controlled by the microprocessor with memory (20) for an alternating time-sequential forwarding of the transmission or reception signals to the power level detector (6), upstream of which a frequency band filter (33) is connected to suppress out-of-band signals, is present for the separate detection of the transmission signals predominantly applied at the transmission signal port (16) in a frequency channel within the frequency band and of the reception signals predominantly applied at the reception signal port (17) in a frequency channel within the frequency band.

10. An antenna diversity device (1) in accordance with claim 9, wherein
the vehicle transceiver device (2, 2b) is, however, configured for transmitting and receiving on different frequency channels and, to recognize the transmission channel frequency and the reception channel frequency, a frequency search algorithm is stored in the microprocessor with memory (20) to control a voltage-controlled oscillator (30) whose oscillator signal with the transmission or reception signals are converted in the frequency mixer (31) into IF output signals at a lower frequency which are supplied to the microprocessor with memory (20) and are analyzed by way of calculation there - and the transmission channel frequency and the reception channel frequency are thus also stored in the microprocessor with memory (20).

11. An antenna diversity device (1) in accordance with claim 10, wherein,
for a further relief of the calculation power of the microprocessor with memory (20), an intermediate frequency filter bank (32) having IF frequency channel band filters corresponding to the individual frequency channels of the frequency band is present which is connected downstream of the IF output of the frequency mixer (31), whose filter output signals are supplied to the microprocessor with memory (20), and the frequency search algorithm stored in the microprocessor with memory (20) is designed in a manner such that the active channels are determined in the microprocessor with memory (20), and are stored there, via the stepwise control of the frequency of the voltage-controlled oscillator (30) by a determination by way of calculation of the transmission levels at the individual channel frequencies of the transmission levels in the switch position (24) or of the reception levels in the switch position (25).

12. An antenna diversity device (1) in accordance with any one of the preceding claims, wherein an algorithm stored in a microprocessor with memory (20) for controlling the antenna diversity device (1) is designed in a manner such that, in a cycle sequence, in each case alternatingly over test cycles, the setting of the antenna diversity device (1) is given for a smaller transmission power level (5) at the transmission channel frequency and the setting of the antenna diversity device (1) is given for a larger reception power level (35) at the reception channel frequency.

13. An antenna diversity device (1) in accordance with claim 3, wherein the controllable antenna combiner (11) includes controllable antenna switches (26) which, on the one hand, are each connected to the combiner signal connector (18) and, on the other hand, are each connected to at least one of two antennas (34a, 34b, 34c ...) whose associated switch positions are set in combination at the control connector (8) via the combiner setting signals (29) of the microprocessor with memory (20) and different radiation directivities are set via different switch positions.

14. An antenna diversity device (1) in accordance with claim 3, wherein settable phase rotation elements (27) are present in the controllable antenna combiner (11) so that the antenna elements (34a, 34b, 34c, ...) are combined in a differently settable manner at the combiner signal connector (18) via the settable antenna switches (26) and the settable phase rotation elements (27) and different radiation directivities are set at the control connector (8) via different switch positions and different settings of the settable phase rotation elements (29) via the combiner setting signals (29) of the microprocessor with memory (20).

## Revendications

1. Dispositif d'antenne pour un véhicule, pour un dispositif émetteur-récepteur de véhicule (2) dont le dispositif de régulation du niveau de puissance d'émission est conçu de telle sorte que, pendant une communication bidirectionnelle, le niveau de puissance d'émission (5) est réglé à un niveau plus élevé lorsque la qualité de la liaison de communication diminue et inversement à un niveau plus bas lorsque la qualité de la liaison de communication augmente, comprenant les caractéristiques suivantes :
- le dispositif d'antenne est conçu comme un dispositif de diversité d'antenne (1) avec plusieurs éléments d'antenne (34a, 34b, ...) de telle sorte que plusieurs réglages de diversité peuvent être sélectionnés pour permettre la sélection de différentes directivités de rayonnement pour l'émission et pour la réception,
- le dispositif de diversité d'antenne (1) peut être relié à la connexion haute fréquence (3) du dispositif émetteur-récepteur de véhicule (2),
- un détecteur de niveau de puissance (6) est présent dans le dispositif de diversité d'antenne (1), lequel est conçu pour détecter et enregistrer en continu le niveau de puissance d'émission (5) du dispositif émetteur-récepteur de véhicule (2),
- pour augmenter la qualité de transmission de la liaison de communication, après le choix, effectué en alternance, d'un réglage différent du dispositif de diversité d'antenne (1) et la détection du niveau de puissance d'émission existant à ce réglage, un réglage du dispositif de diversité d'antenne (1) auquel un niveau de puissance d'émission plus faible est atteint est choisi.

2. Dispositif de diversité d'antenne (1) selon la revendication 1, dans lequel,
lors de la communication bidirectionnelle dans le dispositif de diversité d'antenne (1), dans le cadre d'un processus d'essai en étapes d'essai successives, un réglage différent du dispositif de diversité d'antenne (1) est choisi à chaque fois de telle sorte que le niveau de puissance d'émission (5) apparaissant à chaque réglage d'essai est détecté et enregistré en tant que niveau de puissance d'émission d'essai (9) du dispositif d'émission-réception du véhicule (1) et, à la fin du processus d'essai, un réglage du dispositif de diversité d'antenne (1) avec lequel un niveau de puissance d'émission (5) plus faible est détecté est choisi sur la base de la comparaison des niveaux de puissance d'émission d'essai (9) entre eux.

3. Dispositif de diversité d'antenne (1) selon la revendication 1 ou 2, dans lequel le dispositif de diversité d'antenne (1) contient les unités structurales suivantes :
- un système multi-antenne (12) constitué d'une pluralité d'éléments d'antenne (34a, 34b, 34c, ...),
- un dispositif de commande de diversité (10) avec les unités structurales suivantes :
- au moins un combinateur d'antennes commandable (11) avec une connexion de signal de combinateur (18) et avec une connexion de commande (8) pour le réglage commandé de différentes directivités de rayonnement du système multi-antenne (12), auquel les éléments d'antenne (34a, 34b, 34c,...) du système multi-antenne (12) sont connectés,
- un élément de couplage multi-port à faible perte (13), dont le premier port (14) peut être relié à la connexion haute fréquence (3) du dispositif émetteur-récepteur de véhicule (2) et dont le deuxième port (15) est relié à la connexion de signal de combinateur (18), dans lequel il existe un couplage fort entre le premier port (14) et le deuxième port (15), et avec au moins un autre port désigné par port de signaux d'émission (16) ayant un couplage faible au premier port (14),
- au moins un microprocesseur avec mémoire (20) qui est relié côté entrée à la sortie du détecteur de niveau de puissance (6) et côté sortie à l'entrée de commande (8) du combinateur d'antennes commandable (11), dans lequel
- dans le microprocesseur avec mémoire (20) est stocké un algorithme de commande du combinateur d'antennes commandable (11), au moyen duquel, à la fin de chaque processus d'essai, un niveau de puissance d'émission (5) plus faible est indiqué par le détecteur de niveau de puissance (6), et dans lequel
- le détecteur de niveau de puissance (6) est relié côté entrée au port de signaux d'émission (16).

4. Dispositif de diversité d'antenne (1) selon la revendication 3, dans lequel le dispositif émetteur-récepteur de véhicule (2, 2a) est conçu pour l'émission et la réception sur le même canal de fréquence et l'algorithme stocké dans le microprocesseur avec mémoire (20) est conçu pour commander le dispositif de diversité d'antenne (1) de telle sorte que lorsqu'une valeur seuil de niveau d'émission-réception prédéfinie est dépassée à la sortie du détecteur de niveau de puissance (6), un créneau temporel d'émission est détecté, pendant lequel le réglage du dispositif de diversité d'antenne (1) pour un niveau de puissance d'émission plus faible (5) est donné par le microprocesseur avec mémoire (20).

5. Dispositif de diversité d'antenne (1) selon l'une des revendications précédentes, dans lequel pour le couplage de signal directionnel du détecteur de niveau de puissance (6) pour la détermination du niveau de puissance d'émission (5), un coupleur directionnel (21) à faible affaiblissement d'insertion entre son premier port (14) et son deuxième port (15) est présent, et le coupleur directionnel (21) est connecté par son premier port (14) et son deuxième port (15) entre la connexion haute fréquence (3) et la connexion de signal de combinateur (18) de telle sorte que le faible affaiblissement d'insertion du coupleur directionnel (21) existe entre le premier port (14) et le deuxième port (15), et le niveau de puissance d'émission (5) réduit par le facteur de couplage du coupleur directionnel (21) est détecté au port de signaux d'émission (16) avec le détecteur de niveau de puissance (6).

6. Dispositif de diversité d'antenne (1) selon la revendication 5, dans lequel un autre port, désigné par port de signaux de réception (17), est présent au niveau du coupleur directionnel (21) pour la réception directionnelle des signaux de réception du dispositif de diversité d'antenne (1) réduits par le facteur de couplage et des signaux d'émission encore atténués par le facteur directionnel du coupleur directionnel (21).

7. Dispositif de diversité d'antenne (1) selon la revendication 6 en liaison avec la revendication 3, dans lequel aussi bien les signaux d'émission que les signaux de réception au port de signaux de réception (17) sont amenés au détecteur de niveau de puissance (6) et une valeur seuil de niveau d'émission-réception est établie pour une communication d'émission-réception bidirectionnelle séquentielle dans le temps sur le même canal de fréquence dans le microprocesseur avec mémoire (20) et l'algorithme de commande du dispositif de diversité d'antenne (1) est conçu de cette sorte que, lorsque le niveau de puissance devient inférieur à la valeur seuil de niveau d'émission-réception prédéfinie à la sortie du détecteur de niveau de puissance (6), un créneau temporel de réception est détecté, pendant lequel un autre réglage du dispositif de diversité d'antenne (1) est sélectionné par le microprocesseur avec mémoire (20) dans des étapes d'essai successives dans le cadre d'un processus d'essai, et le niveau de puissance de réception (39) apparaissant à chaque réglage d'essai du dispositif de diversité d'antenne (1) est détecté et enregistré en tant que niveau de puissance de réception d'essai (19) du dispositif émetteur-récepteur de véhicule (1), et, à la fin du processus d'essai, un réglage du dispositif de diversité d'antenne (1) avec lequel un niveau de puissance de réception (37) plus élevé est atteint est choisi sur la base de la comparaison des niveaux de puissance de réception d'essai (19) entre eux, et que, lorsque la valeur seuil de niveau d'émission-réception prédéfinie est dépassée selon la revendication 3, un niveau de puissance d'émission (5) plus faible est atteint.

8. Dispositif de diversité d'antenne (1) selon la revendication 7, dans lequel pour l'accord en fréquence autonome de la détection du niveau d'émission sur un canal de fréquence bidirectionnel actif dans la bande de fréquences, un oscillateur (30) commandé par le microprocesseur avec mémoire (20) est présent, dont le signal d'oscillateur et les signaux d'émission et de réception sont amenés à un mélangeur de fréquences (31) pour la conversion de fréquence en signaux de fréquence intermédiaire à un niveau de fréquence intermédiaire inférieur et les niveaux de puissance des signaux de fréquence intermédiaire détectés dans le détecteur de niveau de puissance FI (6) avec filtre de bande de canal de fréquence FI (36) sont amenés au microprocesseur avec mémoire (20), qui, en commandant la fréquence de l'oscillateur (30), détermine séquentiellement le contenu en signaux des différents canaux de fréquence et accorde ensuite la détection des niveaux d'émission et de réception sur le canal de fréquence actif.

9. Dispositif de diversité d'antenne (1) selon l'une des revendications 3 à 8, dans lequel, pour la détection séparée des signaux d'émission majoritairement présents au port de signaux d'émission (16) dans un canal de fréquence à l'intérieur de la bande de fréquences et des signaux de réception majoritairement présents au port de signaux de réception (17) dans un canal de fréquence à l'intérieur de la bande de fréquences, il est prévu un commutateur (23) commandé électroniquement par le microprocesseur avec mémoire (20) pour la transmission alternée, séquentielle dans le temps, des signaux d'émission et de réception au détecteur de niveau de puissance (6) qui est précédé d'un filtre de bande de fréquences (33) pour supprimer les signaux hors bande.

10. Dispositif de diversité d'antenne (1) selon la revendication 9, dans lequel le dispositif émetteur-récepteur de véhicule (2, 2b) est conçu pour l'émission et la réception sur des canaux de fréquences différents, et, pour détecter la fréquence du canal d'émission et de la fréquence du canal de réception, un algorithme de recherche de fréquence est stocké dans le microprocesseur avec mémoire (20) pour commander un oscillateur commandé en tension (30) dont le signal d'oscillateur est converti avec les signaux d'émission et de réception dans le mélangeur de fréquences (31) en signaux de sortie FI de fréquence inférieure, qui sont amenés au microprocesseur avec mémoire (20) où ils sont analysés par calcul - et la fréquence du canal d'émission et la fréquence du canal de réception sont ainsi également stockées dans le microprocesseur avec mémoire (20).

11. Dispositif de diversité d'antenne (1) selon la revendication 10, dans lequel, pour soulager davantage la puissance de calcul du microprocesseur avec mémoire (20), il est prévu un banc de filtres de fréquence intermédiaire (32) avec des filtres de bande de canal de fréquence FI correspondant aux différents canaux de fréquence de la bande de fréquences, qui est connecté en aval de la sortie FI du mélangeur de fréquences (31) et dont les signaux de sortie de filtre sont amenés au microprocesseur avec mémoire (20), et l'algorithme de recherche de fréquence stocké dans le microprocesseur avec mémoire (20) est conçu de telle sorte que, par la commande pas à pas de la fréquence de l'oscillateur commandé en tension (30), les canaux actifs sont déterminés par calcul des niveaux de signal aux différentes fréquences de canal des niveaux d'émission en position de commutation (24) ou des niveaux de réception en position de commutation (25) dans le microprocesseur avec mémoire (20) et y sont stockés.

12. Dispositif de diversité d'antenne (1) selon l'une des revendications précédentes, dans lequel un algorithme stocké dans un microprocesseur avec mémoire (20) pour commander le dispositif de diversité d'antenne (1) est conçu de telle sorte que, dans une séquence d'horloge, chaque fois en alternance sur des cycles d'essai, le réglage du dispositif de diversité d'antenne (1) soit donné pour un niveau de puissance d'émission (5) plus faible à la fréquence du canal d'émission et le réglage du dispositif de diversité d'antenne (1) pour un niveau de puissance (35) plus élevé à la fréquence du canal de réception.

13. Dispositif de diversité d'antenne (1) selon la revendication 3, dans lequel le combinateur d'antennes commandable (11) contient des commutateurs d'antenne commandables (26) qui sont reliés d'une part à la connexion de signal de combinateur (18) et d'autre part à au moins un de deux éléments d'antenne (34a, 34b, 34c, ...) dont les positions de commutation associées sont réglées de façon combinée par l'intermédiaire des signaux de réglage de combinateur (29) du microprocesseur avec mémoire (20) à la connexion de commande (8) et différentes directivités de rayonnement sont réglées par l'intermédiaire de différentes positions de commutation.

14. Dispositif de diversité d'antenne (1) selon la revendication 3, dans lequel des éléments de rotation de phase réglables (27) sont présents dans le combinateur d'antennes commandable (11), de sorte que les éléments d'antenne (34a, 34b, 34c, ...) sont combinés différemment de manière réglable à la connexion de signal de combinateur (18) par l'intermédiaire des commutateurs d'antenne réglables (26) et des éléments de rotation de phase réglables (27), et différentes directivités de rayonnement sont réglées à la connexion de commande (8) par l'intermédiaire de différentes positions de commutation et de différents réglages des éléments de rotation de phase réglables (27) par l'intermédiaire des signaux de réglage de combinateur (29) du microprocesseur avec mémoire (20).
